(19) Europäisches Patentamt
European Patent Office
Office européen des brevets

(11) **EP 4 417 273 B1**

(12) **EUROPEAN PATENT SPECIFICATION**

(45) Date of publication and mention
of the grant of the patent:
**20.05.2026 Bulletin 2026/21**

(21) Application number: **21960620.9**

(22) Date of filing: **13.10.2021**

(51) International Patent Classification (IPC):
*A63B 71/06* (2006.01)   *G06T 7/00* (2017.01)
*G06V 10/82* (2022.01)   *G06V 40/16* (2022.01)
*G06V 40/20* (2022.01)   *G06T 7/20* (2017.01)
*G06T 7/70* (2017.01)   *G06T 7/73* (2017.01)
*G06T 7/90* (2017.01)

(52) Cooperative Patent Classification (CPC):
**G06T 7/00; A63B 71/06; G06T 7/20; G06T 7/70;
G06T 7/73; G06T 7/90; G06V 10/82; G06V 40/161;
G06V 40/171; G06V 40/23**

(86) International application number:
**PCT/JP2021/037972**

(87) International publication number:
**WO 2023/062762 (20.04.2023 Gazette 2023/16)**

(54) **ESTIMATION PROGRAM, ESTIMATION METHOD, AND INFORMATION PROCESSING DEVICE**

SCHÄTZUNGSPROGRAMM, SCHÄTZUNGSVERFAHREN UND
INFORMATIONSVERARBEITUNGSVORRICHTUNG

PROGRAMME D'ESTIMATION, PROCÉDÉ D'ESTIMATION ET DISPOSITIF DE TRAITEMENT
D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.08.2024 Bulletin 2024/34**

(73) Proprietor: **Fujitsu Limited
Kawasaki-shi, Kanagawa 211-8588 (JP)**

(72) Inventors:
• **SUZUKI, Tatsuya
Kawasaki-shi, Kanagawa 211-8588 (JP)**
• **ISHIKAWA, Yu
Kawasaki-shi, Kanagawa 211-8588 (JP)**

(74) Representative: **Hoffmann Eitle
Patent- und Rechtsanwälte PartmbB
Arabellastraße 30
81925 München (DE)**

(56) References cited:
WO-A1-2007/108405     JP-A- 2007 252 617
JP-A- H0 877 334     US-B1- 6 453 052

• BEN YIP: "EYE CONTACT RECTIFICATION IN
VIDEO CONFERENCE WITH MONOCULAR
CAMERA", PHD, 1 March 2007 (2007-03-01),
XP055163162, Retrieved from the Internet
<URL:http://citeseerx.ist.psu.edu/viewdoc/
download;
jsessionid=1DD294BAB933B5E8
B31ADDF256308B17?doi=10.1.1.123.9269&
rep=rep1&type=pdf> [retrieved on 20150119]
• NUTTAPON VANAKITTISTIEN ET AL: "Game-
ready 3D hair model from a small set of images",
COMPUTER ANIMATION AND VIRTUAL
WORLDS, JOHN WILEY & SONS LTD, GB, vol. 30,
no. 2, 5 July 2018 (2018-07-05), pages n/a,
XP072314798, ISSN: 1546-4261, DOI: 10.1002/
CAV.1855

EP 4 417 273 B1

- G�K�EN  �IMEN: "Animation Models for Interactive AR Characters", DOCTORAL DISSERTATION, 1 January 2019 (2019-01-01), pages 1 - 113, XP055891727, Retrieved from the Internet <URL:https://www.research-collection.ethz.ch/bitstream/handle/20.500.11850/372660/5/AnimationModelsforInteractiveARCharacters.pdf> [retrieved on 20220215]

- ITO, KENTARO; TSURUTA, SEIYA; CHOI, WOONG; SEKIGUCHI, HIROYUKI; HACHIMURA, KOZABURO: "Recognition of Dance Steps with KANSEI Information", JINMONKON 2009 PROCEEDINGS, vol. 16, 11 December 2009 (2009-12-11), pages 147 - 154, XP009545542

**Description**

TECHNICAL FIELD

The present invention relates to an estimation program and the like.

BACKGROUND ART

For detection of three-dimensional movements of a person, a 3D sensing technology has been established that detects 3D skeleton coordinates of a person with accuracy of $\pm 1$ cm from a plurality of 3D laser sensors. This 3D sensing technology is expected to be applied to a gymnastics scoring support system and to be developed to other sports and other fields. A method using a 3D laser sensor is referred to as a "laser method".

In the laser method, a laser beam is irradiated approximately 2 million times per second, and a depth and information of each irradiation point including an object person is obtained based on a travel time (time of flight (ToF)) of the laser beam. Although the laser method may acquire highly accurate depth data, the laser method has a disadvantage that hardware is complex and expensive due to a complex configuration and processing of laser scanning and ToF measurement.

3D skeleton recognition may be performed by an image method instead of the laser method. The image method is a method that acquires Red Green Blue (RGB) data of each pixel by a complementary metal oxide semiconductor (CMOS) imager, in which an inexpensive RGB camera may be used.

Here, a conventional technology of 3D skeleton recognition using 2D features by a plurality of cameras will be described. In the conventional technology, after acquiring 2D features by each camera according to a predefined human body model, a 3D skeleton is recognized using a result of integrating each 2D feature. For example, the 2D features include 2D skeleton information and heatmap information.

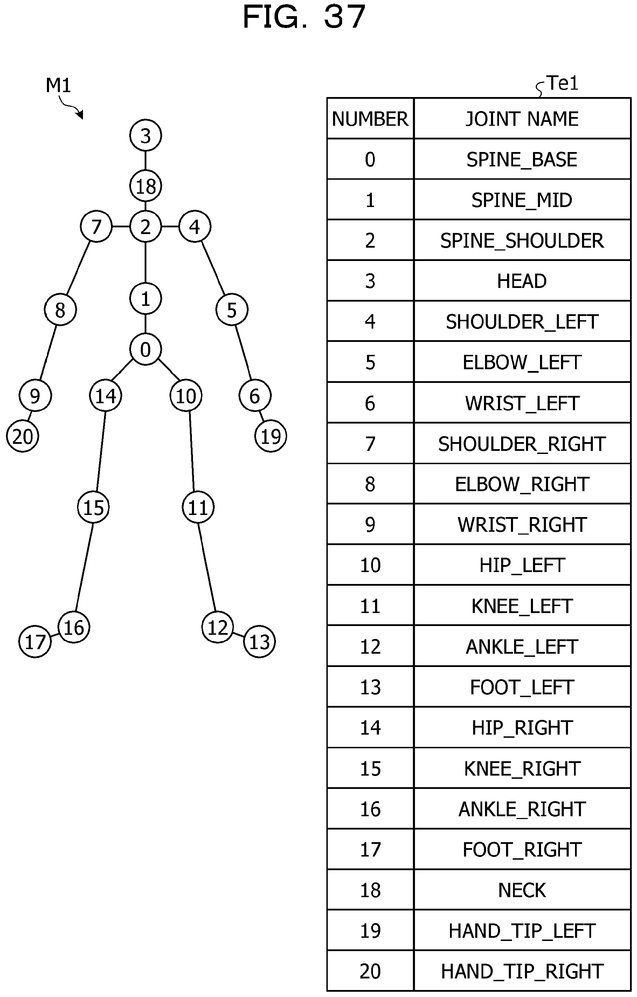

FIG. 37 is a diagram illustrating an example of a human body model. As illustrated in FIG. 37, a human body model M1 includes 21 joints. In the human body model M1, the respective joints are indicated by nodes and assigned with numbers of 0 to 20. A relationship between the numbers of nodes and joint names is a relationship indicated in a table Te1. For example, the joint name corresponding to the node 0 is "SPINE_BASE". Description of the joint names for the nodes 1 to 20 will be omitted.

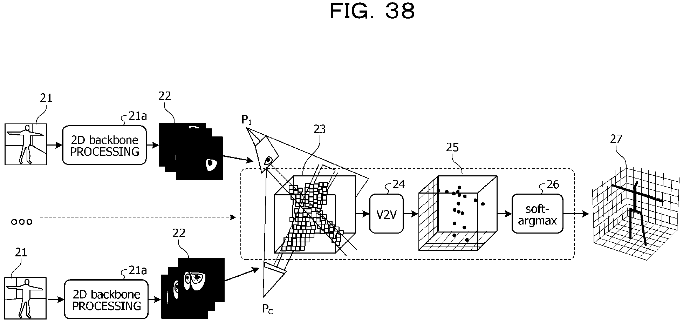

As a conventional technology, there is a technology of performing 3D skeleton recognition using machine learning. FIG. 38 is a diagram for describing a method using machine learning. In the conventional technology using machine learning, 2D features 22 representing each joint feature are acquired by applying 2D backbone processing 21a to each input image 21 captured by each camera. In the conventional technology, aggregated volumes 23 are acquired by back-projecting each of the 2D features 22 onto a 3D cube according to camera parameters.

In the conventional technology, processed volumes 25 representing likelihood of each joint are acquired by inputting the aggregated volumes 23 to V2V (neural network, P3) 24. The processed volumes 25 correspond to a heatmap representing likelihood of each joint in 3D. In the conventional technology, 3D skeleton information 27 is acquired by executing soft-argmax 26 for the processed volumes 25.

CITATION LIST

PATENT DOCUMENT

Patent Document 1: Japanese Laid-open Patent Publication No. 2018-57596
Patent Document 2: Japanese Laid-open Patent Publication No. 2021-26265

Ben Yip: "EYE CONTACT RECTIFICATION IN VIDEO CONFERENCE WITH MONOCULAR CAMERA", PhD,1 March 2007 (2007-03-01), XP055163162, is a PhD thesis disclosing a study meant to rectify the eye contact in video conferencing from a monocular camera using only computer software. In chapter 5, strategies for identifying the top of head to perform head segmentation with dynamic programming are disclosed.

WO 2007/108405 AI discloses a method and system for forming a hairstyle simulation image by synthesizing a face image and a hair image. The used method specifies that there is a specific relationship between the width of the face, the distance between the lower edge of the face contour and the eye line, and the distance between the eye line and the top of the head.

US 6 453 052 B1 discloses a method and image processing system which simulate a hair style selected from among a number of prestored hair images in association with a facial image.

NUTTAPON VANAKITTISTIEN ET AL, "Game- ready 3D hair model from a small set of images", COMPUTER ANIMATION AND VIRTUAL WORLDS, JOHN WILEY & SONS LTD, GB,vol. 30, no. 2, 5 July 2018 discloses a system for creating a hair model that matches a user's hairstyle from images.

## SUMMARY OF INVENTION

### TECHNICAL PROBLEM

However, in the conventional technology described above, there is a problem that a position of a top of a head of a player may not be accurately specified.

It may also be important to accurately specify the position of the top of the head when it is evaluated whether or not a performance of the player has been succeeded. For example, in evaluation of a ring leap in a gymnastics performance, a success condition of the ring leap is that a position of a top of a head of a player is lower than a position of a foot.

At this time, depending on a state of an image, a contour of the head as a result of 3D skeleton recognition differs from an actual contour of the head, and the position of the top of the head may not be accurately specified.

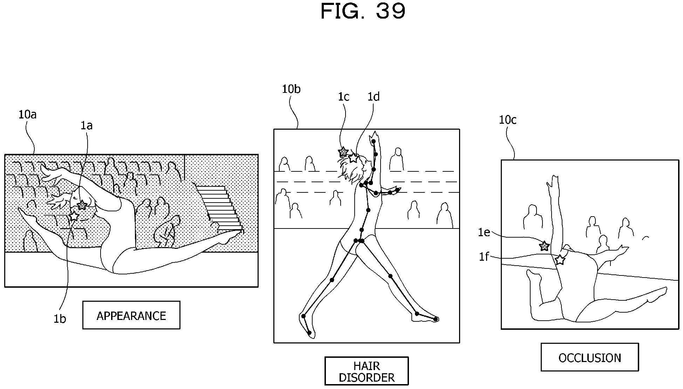

FIG. 39 is a diagram illustrating examples of images in which a position of a top of a head may not be accurately specified. In FIG. 39, description will be given using an image 10a in which "appearance" occurs, an image 10b in which "hair disorder" occurs, and an image 10c in which "occlusion" occurs. The appearance is defined as a state where a head of a player is integrated into a background and it is difficult for a human to determine a head area. The hair disorder is defined as a state where hair of a player is disordered. The occlusion is defined as a state where a top of a head is hidden by a body or an arm of a player.

When 3D skeleton recognition of the image 10a is performed and a position of a top of a head is specified based on the conventional technology, a position 1a is specified due to an influence of the appearance. In the image 10a, an accurate position of the top of the head is 1b.

When 3D skeleton recognition of the image 10b is performed and a position of a top of a head is specified based on the conventional technology, a position 1c is specified due to an influence of the hair disorder. In the image 10b, an accurate position of the top of the head is 1d.

When 3D skeleton recognition of the image 10c is performed and a position of a top of a head is specified based on the conventional technology, a position 1e is specified due to an influence of the occlusion. In the image 10c, an accurate position of the top of the head is 1f.

As described with reference to FIG. 39, in the conventional technology, when the appearance, the hair disorder, the occlusion, or the like occurs in an image, a position of a top of a head of a player may not be accurately specified, and a performance of the player may not be appropriately evaluated. Thus, it is needed to accurately estimate a position of a top of a head of a person.

In one aspect, an object of the present invention is to provide an estimation program, an estimation method, and an information processing device capable of accurately estimating a position of a top of a head of a player.

### SOLUTION TO PROBLEM

The invention is carried out according to the appended claims. In a first option, a computer is caused to execute the following processing. A computer specifies positions of a plurality of joints included in a face of a player by inputting an image in which a head of the player is in a predetermined state to a machine learning model. The computer estimates a position of a top of the head of the player using each of the positions of the plurality of joints.

### ADVANTAGEOUS EFFECTS OF INVENTION

It is possible to accurately estimate a position of a top of a head of a person.

### BRIEF DESCRIPTION OF DRAWINGS

FIG. 1 is a diagram illustrating an example of a gymnastics scoring support system according to the present first embodiment.
FIG. 2 is a diagram for describing an example of source information.
FIG. 3 is a diagram for describing an example of target information.
FIG. 4 is a diagram for supplementarily describing a method of calculating conversion parameters.
FIG. 5 is a diagram for supplementarily describing a method of estimating a top of a head of a player.

FIG. 6 is a diagram for describing an effect of an information processing device according to the present first embodiment.

FIG. 7 is a functional block diagram illustrating a configuration of a training device according to the present first embodiment.

FIG. 8 is a diagram illustrating an example of a data structure of training data.

FIG. 9 is a functional block diagram illustrating a configuration of the information processing device according to the present first embodiment.

FIG. 10 is a diagram illustrating an example of a data structure of a measurement table.

FIG. 11 is a diagram illustrating an example of a data structure of a skeleton recognition result table.

FIG. 12 is a diagram for describing second features.

FIG. 13 is a diagram illustrating one second feature.

FIG. 14 is a diagram for supplementarily describing RANSAC.

FIG. 15 is a diagram for describing a problem of the RANSAC.

FIG. 16 is a diagram for describing processing of an estimation unit according to the present first embodiment.

FIG. 17 is a diagram for describing processing of detecting a bone length abnormality.

FIG. 18 is a diagram for describing processing of detecting a reverse/lateral bend abnormality.

FIG. 19 is a diagram (1) for supplementarily describing each vector used in reverse/lateral bend abnormality detection.

FIG. 20 is a diagram (2) for supplementarily describing each vector used in the reverse/lateral bend abnormality detection.

FIG. 21 is a diagram (3) for supplementarily describing each vector used in the reverse/lateral bend abnormality detection.

FIG. 22 is a diagram (4) for supplementarily describing each vector used in the reverse/lateral bend abnormality detection.

FIG. 23 is a diagram for describing processing of detecting an excessive bend abnormality.

FIG. 24 is a diagram for describing bone length correction.

FIG. 25 is a diagram for describing reverse/lateral bend correction.

FIG. 26 is a diagram for describing excessive bend correction.

FIG. 27 is a flowchart illustrating a processing procedure of the training device according to the present first embodiment.

FIG. 28 is a flowchart illustrating a processing procedure of the information processing device according to the present first embodiment.

FIG. 29 is a flowchart (1) illustrating a processing procedure of conversion parameter estimation processing.

FIG. 30 is a flowchart (2) illustrating the processing procedure of the conversion parameter estimation processing.

FIG. 31 is a diagram for describing a comparison result of errors in estimation of the top of the head.

FIG. 32 is a diagram illustrating an example of source information according to the present second embodiment.

FIG. 33 is a diagram for describing processing of specifying a top of a head.

FIG. 34 is a functional block diagram illustrating a configuration of an information processing device according to the present second embodiment.

FIG. 35 is a flowchart illustrating a processing procedure of the information processing device according to the present second embodiment.

FIG. 36 is a diagram illustrating an example of a hardware configuration of a computer that implements functions similar to those of the information processing device.

FIG. 37 is a diagram illustrating an example of a human body model.

FIG. 38 is a diagram for describing a method using machine learning.

FIG. 39 is a diagram illustrating examples of images in which a position of a top of a head may not be accurately specified.

DESCRIPTION OF EMBODIMENTS

Hereinafter, embodiments of an estimation program, an estimation method, and an information processing device disclosed in the present application will be described in detail with reference to the drawings. Note that this invention is not limited by these embodiments.

[First Embodiment]

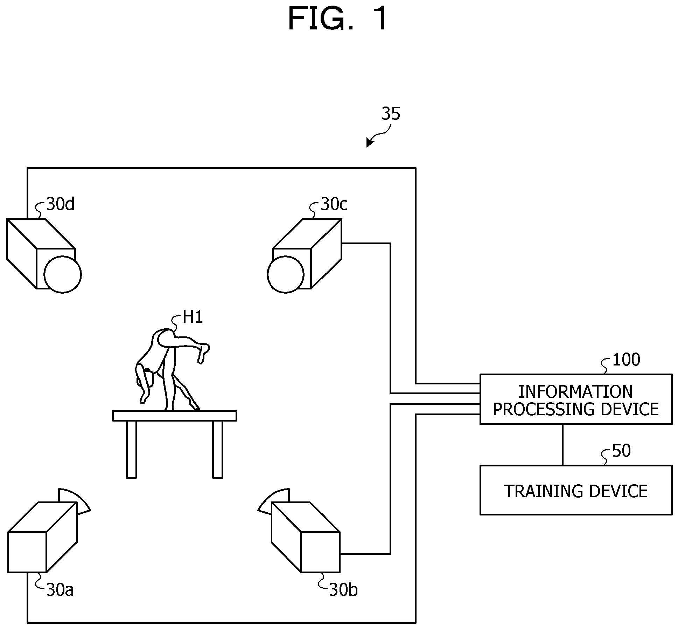

FIG. 1 is a diagram illustrating an example of a gymnastics scoring support system according to the present first embodiment. As illustrated in FIG. 1, a gymnastics scoring support system 35 includes cameras 30a, 30b, 30c, and 30d, a training device 50, and an information processing device 100. The cameras 30a to 30d and the information processing device 100 are wiredly or wirelessly coupled to each other. The training device 50 and the information processing device 100 are wiredly or wirelessly coupled to each other.

Although the cameras 30a to 30d are illustrated in FIG. 1, the gymnastics scoring support system 35 may further include another camera.

In the present first embodiment, as an example, it is assumed that a player H1 performs a series of performances on an instrument. However, the present invention is not limited to this. For example, the player H1 may perform a performance in a place where no instrument exists or may perform an action other than the performance.

The camera 30a is a camera that captures an image of the player H1. The camera 30a corresponds to a CMOS imager, an RGB camera, or the like. The camera 30a continuously captures images at a predetermined frame rate (frames per second (FPS)), and transmits data of the images to the information processing device 100 in time series. In the following description, data of one certain image among data of the plurality of consecutive images is referred to as an "image frame". Frame numbers are assigned to image frames in time series.

Description regarding the cameras 30b, 30c, and 30d is similar to the description regarding the camera 30a. In the following description, the cameras 30a to 30d are appropriately collectively referred to as a camera 30.

The training device 50 performs machine learning of a machine learning model that estimates positions of facial joints from an image frame based on training data prepared in advance. The facial joints include left and right eyes, left and right ears, nose, chin, mouth, and the like. In the following description, the machine learning model that estimates positions of facial joints from an image frame is referred to as a "facial joint estimation model". The training device 50 outputs information of the machine-learned facial joint estimation model to the information processing device 100.

The information processing device 100 estimates a position of a top of a head of the player H1 based on source information prepared in advance and target information that is a recognition result of facial joints using the facial joint estimation model. Hereinafter, the source information and the target information will be described.

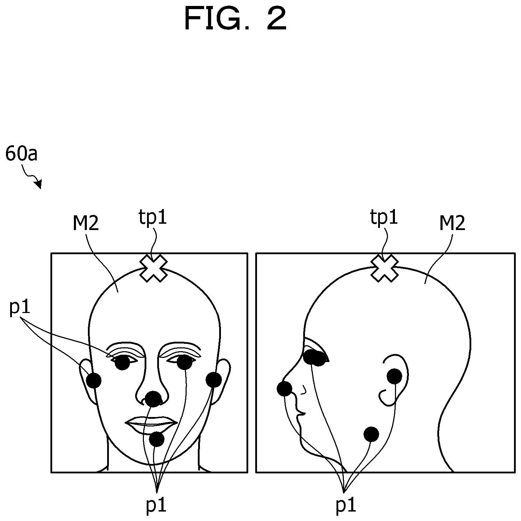

FIG. 2 is a diagram for describing an example of the source information. As illustrated in FIG. 2, in source information 60a, each of positions of a plurality of facial joints p1 and a position of a head top joint tp1 is set in a 3D human body model M2. The source information 60a is set in the information processing device 100 in advance.

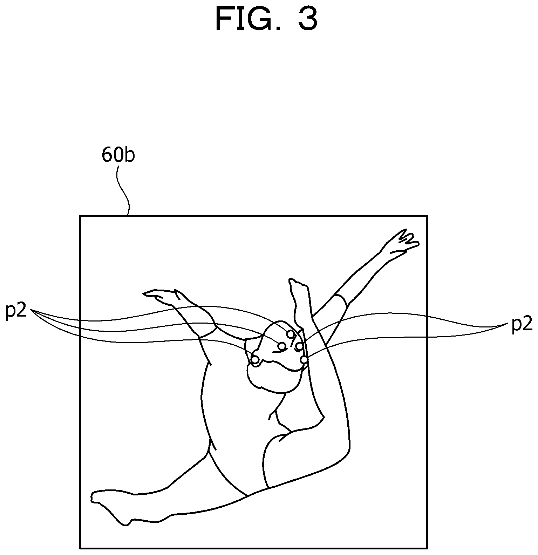

FIG. 3 is a diagram for describing an example of the target information. The target information is generated by inputting an image frame acquired from the camera to the facial joint estimation model. As illustrated in FIG. 3, in target information 60b, each of a plurality of facial joints p2 is specified.

The information processing device 100 calculates conversion parameters for aligning the respective positions of the facial joints of the source information 60a with the respective positions of the facial joints of the target information 60b. The information processing device 100 estimates the position of the top of the head of the player H1 by applying the calculated conversion parameters to a position of a top of a head of the source information 60a.

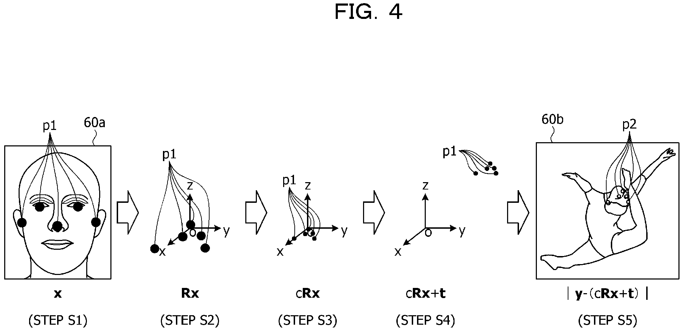

FIG. 4 is a diagram for supplementarily describing a method of calculating the conversion parameters. The conversion parameters include rotation R, translation t, and scale c. The rotation R and the translation t are vector values. The scale c is a scalar value. Steps S1 to S5 will be described in this order.

Step S1 will be described. It is assumed that a position of the plurality of facial joints p1 included in the source information 60a is x (x is a vector value).

Step S2 will be described. By applying the rotation R to the position x of the facial joints, the position of the facial joints p1 becomes "Rx".

Step S3 will be described. By applying the scale c to the updated position "Rx" of the facial joints p1, the position of the facial joints p1 becomes "cRx".

Step S4 will be described. By adding the translation t to the updated position "cRx" of the facial joints p1, the position of the facial joints p1 becomes "cRx + t".

Step S5 will be described. When it is assumed that a position of the facial joints p2 of the target information 60b is y, a difference between the source information 60a to which the conversion parameters are applied and the target information 60b may be specified by calculating $|y - (cRx + t)|$.

Specifically, a difference $e^2$ between the source information 60a to which the conversion parameters are applied and the target information 60b is defined by Expression (1). In Expression (1), x indicates the position of the facial joints of the source information 60a. y indicates the position of the facial joints of the target information 60b.

[Expression 1]

$$e^2(\boldsymbol{R}, \boldsymbol{t}, c) = \frac{1}{n}\sum_{i=1}^{n}\|y_i - (c\boldsymbol{R}x_i + \boldsymbol{t})\|^2 \quad \cdots (1)$$

The information processing device 100 uses a least squares method or the like to calculate the conversion parameters R, t, and c with which the difference $e^2$ in Expression (1) is minimized.

After calculating the conversion parameters, the information processing device 100 estimates the position of the top of the head of the player H1 by applying the conversion parameters to the position of the top of the head of the source information 60a.

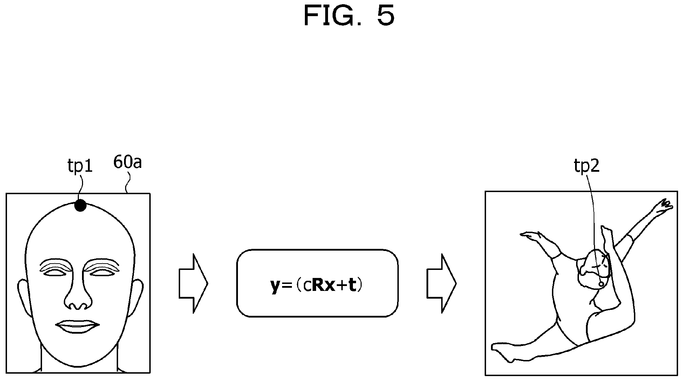

FIG. 5 is a diagram for supplementarily describing a method of estimating the top of the head of the player. The information processing device 100 calculates, based on Expression (2), the position y (including a position tp2 of the top of the head) of the facial joints of the player from the position x (including a position tp1 of the top of the head) of face coordinates of the source information 60a. The conversion parameters of Expression (2) are conversion parameters with which the difference $e^2$ calculated by the processing described above is minimized. The information processing device 100 acquires the position tp2 of the top of the head included in the calculated position y.

[Expression 2]

$$y = cRx + t \qquad \cdots (2)$$

As described above, the information processing device 100 calculates the conversion parameters for aligning the positions of the facial joints of the source information 60a with the positions of the facial joints of the target information 60b. The information processing device 100 calculates the position of the top of the head of the player by applying the calculated conversion parameters to the top of the head of the source information 60a. Since a relationship between the facial joints and the top of the head is a rigid body relationship, estimation accuracy may be improved by estimating the position of the top of the head of the player using such a relationship.

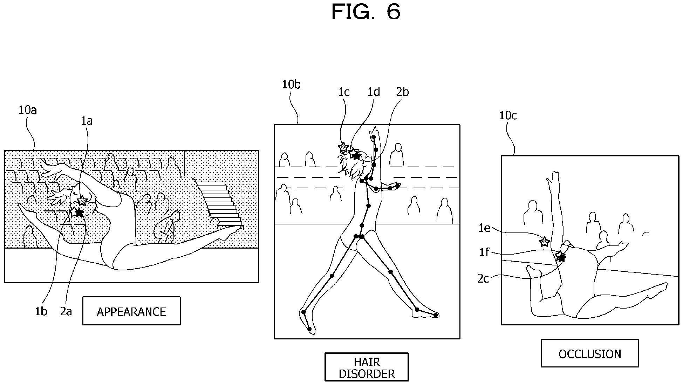

FIG. 6 is a diagram for describing an effect of the information processing device according to the present first embodiment. In FIG. 6, description will be given using an image 10a in which "appearance" occurs, an image 10b in which "hair disorder" occurs, and an image 10c in which "occlusion" occurs.

When 3D skeleton recognition of the image 10a is performed and a position of a top of a head is specified based on a conventional technology, a position 1a of the top of the head is specified due to an influence of the appearance. On the other hand, the information processing device 100 executes the processing described above to specify a position 2a of the top of the head. In the image 10a, since an accurate position of the top of the head is 1b, the estimation accuracy of the top of the head is improved as compared with the conventional technology.

When 3D skeleton recognition of the image 10b is performed and a position of a top of a head is specified based on the conventional technology, a position 1c of the top of the head is specified due to an influence of the hair disorder. On the other hand, the information processing device 100 executes the processing described above to specify a position 2b of the top of the head. In the image 10b, since an accurate position of the top of the head is 1d, the estimation accuracy of the top of the head is improved as compared with the conventional technology.

When 3D skeleton recognition of the image 10c is performed and a position of a top of a head is specified based on the conventional technology, a position 1e is specified due to an influence of the occlusion. On the other hand, the information processing device 100 executes the processing described above to specify a position 2c of the top of the head. In the image 10c, since an accurate position of the top of the head is 1f, the estimation accuracy of the top of the head is improved as compared with the conventional technology.

As described above, the information processing device 100 may improve the estimation accuracy of the top of the head by using the facial joints less affected by an observation defect. Furthermore, also in a case where a performance of the player is evaluated using the top of the head, it is possible to appropriately evaluate success or failure of the performance. The performance of the player using the top of the head includes a ring leap in a balance beam and a part of a performance in a floor exercise.

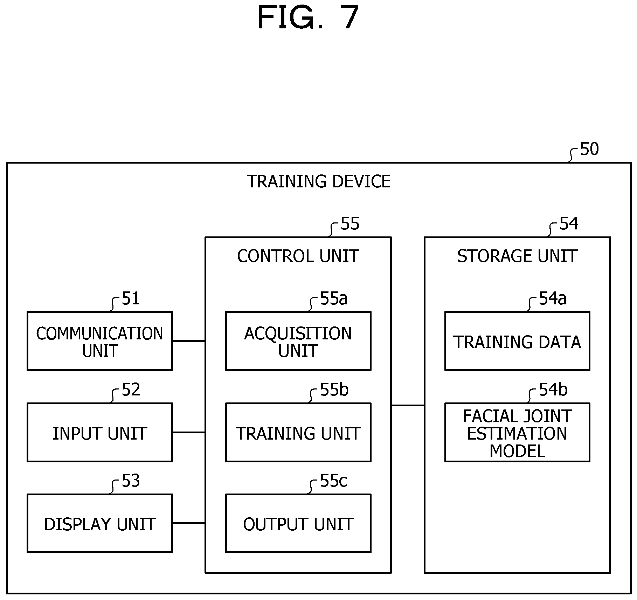

Next, a configuration of the training device 50 described with reference to FIG. 1 will be described. FIG. 7 is a functional block diagram illustrating the configuration of the training device according to the present first embodiment. As illustrated in FIG. 7, the training device 50 includes a communication unit 51, an input unit 52, a display unit 53, a storage unit 54, and a control unit 55.

The communication unit 51 executes data communication with the information processing device 100. For example, the communication unit 51 transmits information of a machine-learned facial joint estimation model 54b to the information processing device 100. The communication unit 51 may receive training data 54a to be used for machine learning from an external device.

The input unit 52 corresponds to an input device for inputting various types of information to the training device 50.

The display unit 53 displays information output from the control unit 55.

The storage unit 54 stores the training data 54a and the facial joint estimation model 54b. The storage unit 54 corresponds to a semiconductor memory element such as a random access memory (RAM) or a flash memory, or a storage device such as a hard disk drive (HDD).

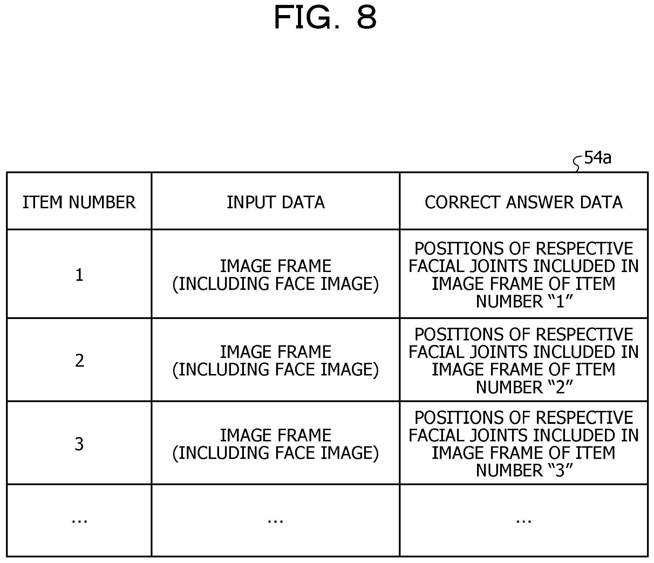

The training data 54a holds information for machine learning of the facial joint estimation model 54b. For example, an image frame with annotation of a facial joint is held as the information for machine learning. FIG. 8 is a diagram illustrating an example of a data structure of the training data. As illustrated in FIG. 8, in the training data, an item number, input data, and correct answer data (label) are associated with each other. An image frame including a face image of a person is set as the input data. Positions of facial joints included in the image frame are set as the correct answer data.

The facial joint estimation model 54b corresponds to a neural network (NN) or the like. In a case where an image frame is input, the facial joint estimation model 54b outputs positions of facial joints based on machine-learned parameters.

The control unit 55 includes an acquisition unit 55a, a training unit 55b, and an output unit 55c. The control unit 55 corresponds to a central processing unit (CPU) or the like.

The acquisition unit 55a acquires the training data 54a from the communication unit 51 or the like. The acquisition unit 55a registers the acquired training data 54a in the storage unit 54.

The training unit 55b executes machine learning of the facial joint estimation model 54b using the training data 54a based on a back propagation method. For example, the training unit 55b trains parameters of the facial joint estimation model 54b so that a result of inputting input data of the training data 54a to the facial joint estimation model 54b approaches correct answer data paired with the input data.

The output unit 55c outputs information of the facial joint estimation model 54b for which machine learning has been completed to the information processing device 100.

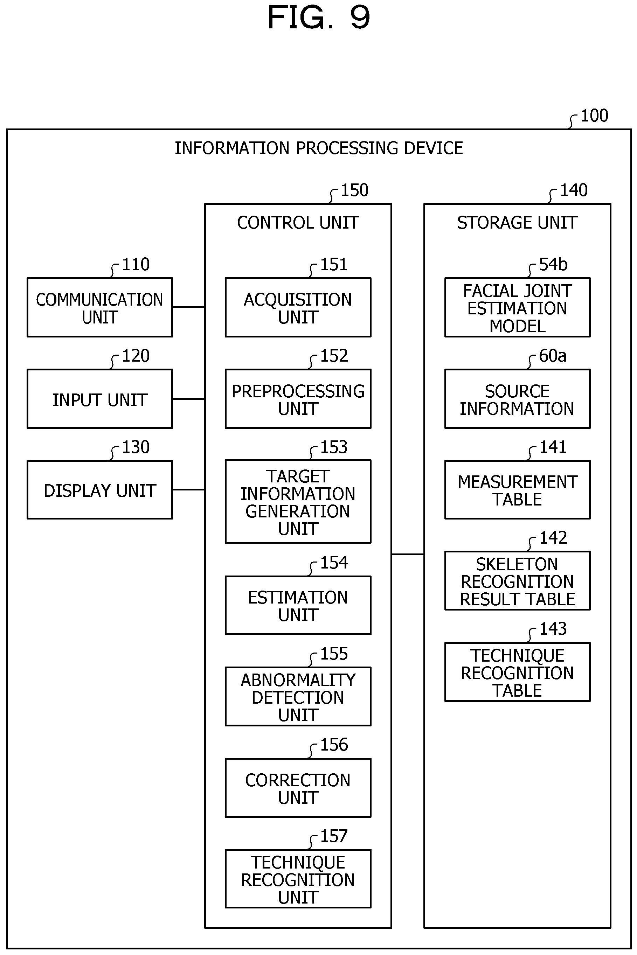

Next, a configuration of the information processing device 100 described with reference to FIG. 1 will be described. FIG. 9 is a functional block diagram illustrating the configuration of the information processing device according to the present first embodiment. As illustrated in FIG. 9, the information processing device 100 includes a communication unit 110, an input unit 120, a display unit 130, a storage unit 140, and a control unit 150.

The communication unit 110 executes data communication with the camera 30 and the information processing device 100. For example, the communication unit 110 receives an image frame from the camera 30. The communication unit 110 transmits information of the machine-learned facial joint estimation model 54b to the information processing device 100.

The input unit 120 corresponds to an input device for inputting various types of information to the information processing device 100.

The display unit 130 displays information output from the control unit 150.

The storage unit 140 includes the facial joint estimation model 54b, the source information 60a, a measurement table 141, a skeleton recognition result table 142, and a technique recognition table 143. The storage unit 140 corresponds to a semiconductor memory element such as a RAM or a flash memory, or a storage device such as an HDD.

The facial joint estimation model 54b is the facial joint estimation model 54b for which machine learning has been executed. The facial joint estimation model 54b is trained by the training device 50 described above.

As described with reference to FIG. 2, the source information 60a is information in which each of the positions of the plurality of facial joints p1 and the position of the head top joint tp1 is set.

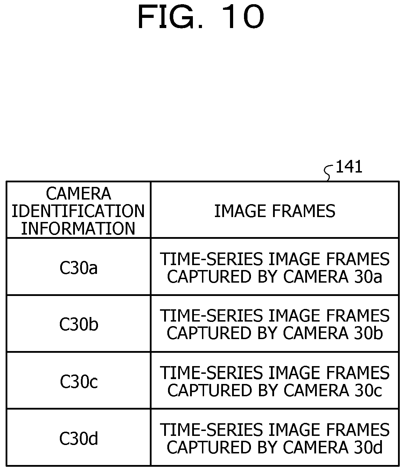

The measurement table 141 is a table that stores image frames captured by the camera 30 in time series. FIG. 10 is a diagram illustrating an example of a data structure of the measurement table. As illustrated in FIG. 10, in the measurement table 141, camera identification information and image frames are associated with each other.

The camera identification information is information that uniquely identifies the camera. For example, camera identification information "C30a" corresponds to the camera 30a, camera identification information "C30b" corresponds to the camera 30b, camera identification information "C30c" corresponds to the camera 30c, and camera identification information "C30d" corresponds to the camera 30d. The image frames are time-series image frames captured by the corresponding camera 30. It is assumed that frame numbers are set to the respective image frames in time series.

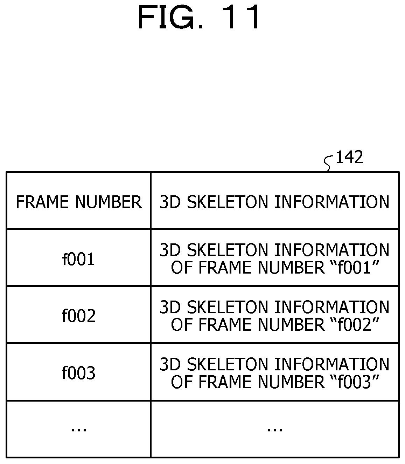

The skeleton recognition result table 142 is a table that stores a recognition result of a 3D skeleton of the player H1. FIG. 11 is a diagram illustrating an example of a data structure of the skeleton recognition result table. As illustrated in FIG. 11, in the skeleton recognition result table 142, a frame number and 3D skeleton information are associated with each other. The frame number is a frame number assigned to an image frame used in a case where the 3D skeleton information is estimated. The 3D skeleton information includes positions of the joints defined for the respective nodes 0 to 20 illustrated in FIG. 37 and the positions of the plurality of facial joints including the top of the head.

The technique recognition table 143 is a table in which a time-series change of each joint position included in each piece of 3D skeleton information and a technique type are associated with each other. Furthermore, in the technique recognition table 143, a combination of technique types and a score are associated with each other. The score is calculated by adding a difficulty (D) score and an execution (E) score. For example, the D score is a score calculated based on a difficulty level of a technique. The E score is a score calculated by a point deduction scoring system according to a perfection level of a technique.

For example, the technique recognition table 143 also includes information in which time-series conversion of the top of the head and the technique type are associated with each other as in a ring leap in a balance beam and a part of a performance in a floor exercise.

The description returns to FIG. 9. The control unit 150 includes an acquisition unit 151, a preprocessing unit 152, a target information generation unit 153, an estimation unit 154, an abnormality detection unit 155, a correction unit 156, and a technique recognition unit 157. The control unit 150 corresponds to a CPU or the like.

The acquisition unit 151 acquires the facial joint estimation model 54b for which machine learning has been executed from the training device 50 via the communication unit 110, and registers the facial joint estimation model 54b in the storage unit 140.

The acquisition unit 151 acquires image frames in time series from the camera 30 via the communication unit 110. The acquisition unit 151 stores the image frames acquired from the camera 30 in the measurement table 141 in association with the camera identification information.

The preprocessing unit 152 executes 3D skeleton recognition of the player H1 from image frames (multi-viewpoint image frames) registered in the measurement table 141. The preprocessing unit 152 may generate 3D skeleton information of the player H1 using any conventional technology. Hereinafter, an example of processing of the preprocessing unit 152 will be described.

The preprocessing unit 152 acquires image frames of the camera 30 from the measurement table 141, and generates a plurality of second features corresponding to each joint of the player H1 based on the image frames. The second feature is a heatmap indicating likelihood of each joint position. The second feature corresponding to each joint is generated from one image frame acquired from one camera. For example, assuming that the number of joints is 21 and the number of cameras is 4, 84 second features are generated for each image frame.

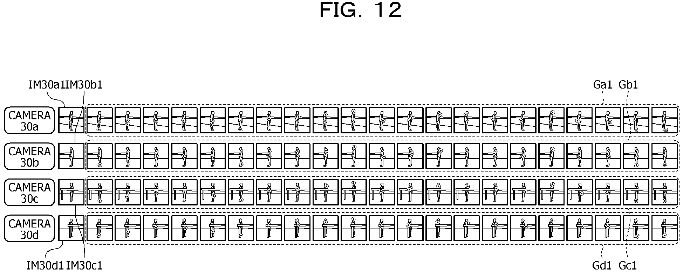

FIG. 12 is a diagram for describing the second features. An image frame Im30a1 illustrated in FIG. 12 is an image frame captured by the camera 30a. An image frame Im30b1 is an image frame captured by the camera 30b. An image frame Im30c1 is an image frame captured by the camera 30c. An image frame Im30d1 is an image frame captured by the camera 30d.

The preprocessing unit 152 generates second feature group information G1a based on the image frame Im30a1. The second feature group information G1a includes 21 second features corresponding to each joint. The preprocessing unit 152 generates second feature group information G1b based on the image frame Im30b1. The second feature group information G1b includes 21 second features corresponding to each joint.

The preprocessing unit 152 generates second feature group information G1c based on the image frame Im30c1. The second feature group information G1c includes 21 second features corresponding to each joint. The preprocessing unit 152 generates second feature group information G1d based on the image frame Im30d1. The second feature group information G1d includes 21 second features corresponding to each joint.

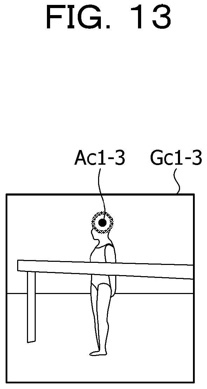

FIG. 13 is a diagram illustrating one second feature. A second feature Gc1-3 illustrated in FIG. 13 is a second feature corresponding to a joint "HEAD" among the second features included in the second feature group information G1d. Likelihood is set for each pixel of the second feature Gc1-3. In FIG. 13, a color corresponding to a value of the likelihood is set. A portion where the likelihood is the maximum is coordinates of the corresponding joint. For example, in the feature Gc1-3, it may be specified that an area Ac1-3 in which the value of the likelihood is the maximum is coordinates of the joint "HEAD".

The preprocessing unit 152 detects an abnormal second feature from the second features included in the second feature group information G1a, and removes the detected abnormal second feature from the second feature group information G1a. The preprocessing unit 152 detects an abnormal second feature from the second features included in the second feature group information G1b, and removes the detected abnormal second feature from the second feature group information G1b.

The preprocessing unit 152 detects an abnormal second feature from the second features included in the second feature group information G1c, and removes the detected abnormal second feature from the second feature group information G1c. The preprocessing unit 152 detects an abnormal second feature from the second features included in the second feature group information G1d, and removes the detected abnormal second feature from the second feature group information G1d.

The preprocessing unit 152 integrates the pieces of second feature group information G1a, G1b, G1c, and G1d excluding the abnormal second features, and generates the 3D skeleton information of the player H1 based on an integrated result. The 3D skeleton information generated by the preprocessing unit 152 includes positions (three-dimensional coordinates) of the respective joints described with reference to FIG. 37. Note that the preprocessing unit 152 may generate the 3D skeleton information of the player H1 using the conventional technology described with reference to FIG. 38. Furthermore, in the description of FIG. 37, it is assumed that a joint with the number 3 is "HEAD", but the joint with the number 3 may be a plurality of facial joints including the top of the head.

The preprocessing unit 152 outputs the 3D skeleton information to the estimation unit 154 each time the 3D skeleton information is generated. Furthermore, the preprocessing unit 152 outputs the image frames used to generate the 3D skeleton information to the target information generation unit 153.

The description returns to FIG. 9. The target information generation unit 153 generates target information by inputting an image frame to the facial joint estimation model 54b. Such target information corresponds to the target information 60b described with reference to FIG. 3. The target information generation unit 153 outputs the target information to the estimation unit 154.

In a case where a plurality of image frames is acquired for the same frame number, the target information generation unit 153 selects any one of the image frames and inputs the selected image frame to the facial joint estimation model 54b. The target information generation unit 153 repeatedly executes the processing described above each time the image frame is acquired.

The estimation unit 154 estimates the position of the top of the head of the player H1 based on the source information 60a and the target information 60b (target information specific to an image frame).

Here, a conventional technology (RANdom SAmple Consensus (RANSAC) that removes an outlier of facial joints will be described before description of processing of the estimation unit 154. In the RANSAC, a combination of joints having the maximum value of the inlier number is used as a result after removal of the outlier in determination of the removal of the outlier, but in a case where the inlier number is the same, it is not possible to select which combination of joints is better.

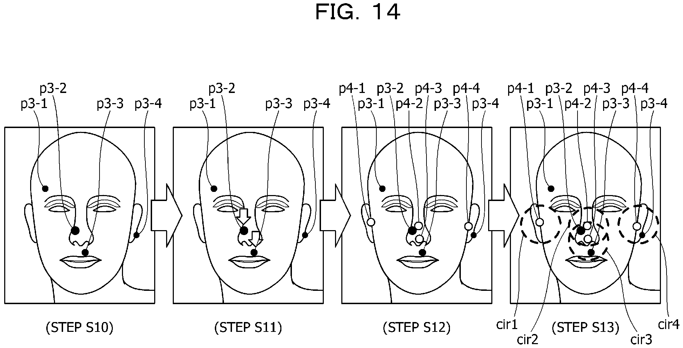

FIG. 14 is a diagram for supplementarily describing the RANSAC. Steps S10 to S13 of FIG. 14 will be described in this order.

Step S10 will be described. It is assumed that facial joints p3-1, p3-2, p3-3, and p3-4 are included in the target information obtained by inputting an image frame to the facial joint estimation model 54b or the like. For example, the facial joint p3-1 is a facial joint of a right ear. The facial joint p3-2 is a facial joint of a nose. The facial joint p3-3 is a facial joint of a neck. The facial joint p3-4 is a facial joint of a left ear.

Step S11 will be described. In the RANSAC, the facial joints are randomly sampled. Here, it is assumed that three facial joints are sampled, and the facial joints p3-2, p3-3, and p3-4 are sampled.

Step S12 will be described. In the RANSAC, positioning based on a rigid body relationship between the source information and the target information is performed, and rotation, translation, and scale are calculated. In the RANSAC, a calculation result (rotation, translation, and scale) is applied to the source information and reprojected to specify facial joints p4-1, p4-2, p4-3, and p4-4.

Step S13 will be described. In the RANSAC, circles cir1, cir2, cir3, and cir4 centered on the facial joints p4-1 to p4-4 are set. Radii (thresholds) of the circles cir1 to cir4 are preset.

In the RANSAC, it is assumed that, among the facial joints p3-1, p3-2, p3-3, and p3-4, the facial joint included in the circles cir1, cir2, cir3, and cir4 is an inlier, and the facial joint not included in the circles cir1, cir2, cir3, and cir4 is an outlier. In the example indicated in step S13 of FIG. 14, the facial joints p3-2, p3-3, and p3-4 are the inliers, and the facial joint p3-1 is the outlier.

In the RANSAC, the number of inliers (hereinafter, the inlier number) is counted. In the example illustrated in step S13, the inlier number is "3". In the RANSAC, the processing of steps S11 to S13 is repeatedly executed while changing the object to be sampled described in step S11, and a combination of facial joints as the object to be sampled having the maximum inlier number is specified. For example, in step S11, in a case where the inlier number when the facial joints p3-2, p3-3, and p3-4 are sampled is the maximum, the facial joints p3-2, p3-3, and p3-4 are output as results after removal of the outlier.

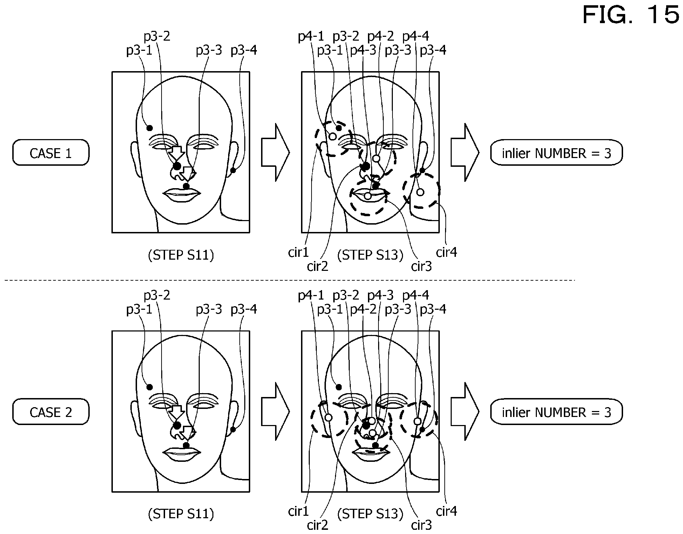

However, the RANSAC described with reference to FIG. 14 has a problem as illustrated in FIG. 15. FIG. 15 is a diagram for describing the problem of the RANSAC. In the RANSAC, it is difficult to determine which combination is better in a case where the inlier number is the same.

A "case 1" in FIG. 15 will be described. In step S11 of the case 1, the facial joints p3-1, p3-2, and p3-3 are sampled. Description of step S12 is omitted.

Step S13 of the case 1 will be described. The circles cir1, cir2, cir3, and cir4 centered on the facial joints p4-1 to p4-4 obtained by reprojecting the source information are set. In the example indicated in step S13 of the case 1, the facial joints p3-1, p3-2, and p3-3 are the inliers, and the inlier number is "3".

A "case 2" in FIG. 15 will be described. In step S11 of the case 2, the facial joints p3-2, p3-3, and p3-4 are sampled. Description of step S12 is omitted.

Step S13 of the case 2 will be described. The circles cir1, cir2, cir3, and cir4 centered on the facial joints p4-1 to p4-4 obtained by reprojecting the source information are set. In the example indicated in step S13 of the case 2, the facial joints p3-2, p3-3, and p3-4 are the inliers, and the inlier number is "3".

Comparing the case 1 with the case 2, the facial joints p3-2, p3-3, and p3-4 are close to center positions of cir2, cir3, and cir4, and it may be said that the case 2 is a better result overall. However, since the inlier number of the case 1 and the inlier number of the case 2 are the same, the result of the case 2 may not be automatically adopted by the RANSAC.

Subsequently, the processing of the estimation unit 154 according to the present first embodiment will be described. First, the estimation unit 154 compares the positions of the facial joints of the source information 60a with the positions of the facial joints of the target information 60b, and calculates conversion parameters (rotation R, translation t, and scale c) that minimize the difference $e^2$ in Expression (1) described above. It is assumed that, in a case where the conversion parameters are calculated, the estimation unit 154 randomly samples three facial joints from the facial joints included in the target information 60b, and calculates the conversion parameters for the sampled facial joints. In the following description, the sampled three facial joints are appropriately referred to as "three joints".

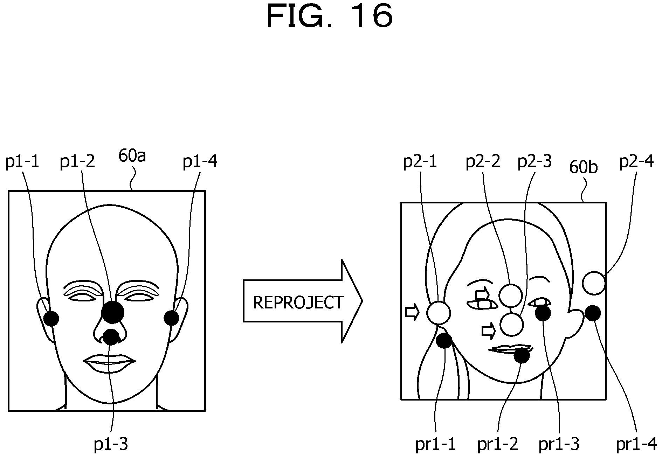

FIG. 16 is a diagram for describing the processing of the estimation unit according to the present first embodiment. In the example illustrated in FIG. 16, it is assumed that facial joints p1-1, p1-2, p1-3, and p1-4 are set in the source information 60a. It is assumed that facial joints p2-1, p2-2, p2-3, and p2-4 are set in the target information 60b. Furthermore, it is assumed that p2-1, p2-2, and p2-3 are sampled among the facial joints p2-1, p2-2, p2-3, and p2-4.

The estimation unit 154 applies the conversion parameters to the facial joints p1-1, p1-2, p1-3, and p1-4 of the source information 60a to perform reprojection to the target information 60b. Then, the facial joints p1-1, p1-2, p1-3, and p1-4 of the source information 60a are reprojected to positions pr1-1, pr1-2, pr1-3, and pr1-4 of the target information 60b, respectively.

The estimation unit 154 compares the facial joints p2-1, p2-2, p2-3, and p2-4 of the target information 60b with the positions pr1-1, pr1-2, pr1-3, and pr1-4, respectively, and counts the inlier number. For example, when it is assumed that a distance between the facial joint p2-1 and the position pr1-1, a distance between the facial joint p2-2 and the position pr1-2, and a distance between the facial joint p3-1 and the position pr3-1 are less than a threshold, and a distance between the facial joint p4-1 and the position pr4-1 is equal to or greater than the threshold, the inlier number is "3".

Here, a distance between a facial joint and a position corresponding to each other (for example, a distance between the position pr1-1 obtained by reprojecting the facial joint p1-1 of the right ear of the source information 60a and the joint position p2-1 of the right ear of the target information 60b) is defined as a reprojection error $\varepsilon$.

The estimation unit 154 calculates an outlier evaluation index E based on Expression (3). In the Expression (3), "$\varepsilon_{max}$" corresponds to the maximum value among a plurality of the reprojection errors $\varepsilon$. "$\mu$" indicates an average value of the remaining reprojection errors $\varepsilon$ excluding $\varepsilon_{max}$ among the plurality of reprojection errors $\varepsilon$.

[Expression 3]

$$ E = \frac{\varepsilon_{max} - \mu}{\mu} \qquad \cdots (3) $$

The estimation unit 154 repeatedly executes the processing of sampling the facial joints of the target information 60b, calculating the conversion parameters, and calculating the inlier number and an outlier evaluation index E, while changing the combination of the three joints. The estimation unit 154 specifies the conversion parameters when the inlier number takes the maximum value among the combinations of the three joints as the final conversion parameters.

In a case where a plurality of the combinations of the three joints with which the inlier number takes the maximum value exists, the estimation unit 154 specifies a combination of the three joints with the smaller outlier evaluation index E, and specifies the conversion parameters obtained by the specified three joints as the final conversion parameters.

In the following description, the final conversion parameters specified from the plurality of conversion parameters based on the inlier number and the outlier evaluation index E by the estimation unit 154 are simply referred to as the conversion parameters.

The estimation unit 154 applies the conversion parameters to Expression (2), and calculates the position y (including the position tp2 of the top of the head) of the plurality of facial joints of the player H1 from the position x (including the position tp1 of the top of the head) of the plurality of face coordinates of the source information 60a. Such processing of the estimation unit 154 corresponds to the processing described with reference to FIG. 5.

Through the processing described above, the estimation unit 154 estimates the position of the face coordinates (the positions of the facial joints and the position of the top of the head) of the player H1, and generates the 3D skeleton information by replacing the information of the head in the 3D skeleton information estimated by the preprocessing unit 152 with the information of the position of the face coordinates. The estimation unit 154 outputs the generated 3D skeleton information to the abnormality detection unit 155. Furthermore, the estimation unit 154 also outputs the 3D skeleton information before the replacement with the information of the position of the face coordinates to the abnormality detection unit 155.

The estimation unit 154 repeatedly executes the processing described above. In the following description, the 3D skeleton information generated by replacing the information of the head of the 3D skeleton information estimated by the preprocessing unit 152 with the information of the position of the face coordinates is appropriately referred to as "post-replacement skeleton information". On the other hand, the 3D skeleton information before the replacement is referred to as "pre-replacement skeleton information". Furthermore, in a case where the post-replacement skeleton information and the pre-replacement skeleton information are not distinguished from each other, the post-replacement skeleton information and the pre-replacement skeleton information are simply referred to as the 3D skeleton information.

The description returns to FIG. 9. The abnormality detection unit 155 detects an abnormality of the top of the head in 3D skeleton information generated by the estimation unit 154. For example, types of abnormality detection include "bone length abnormality detection", "reverse/lateral bend abnormality detection", and "excessive bend abnormality detection". In a case where the abnormality detection unit 155 will be described, the description will be given using the numbers of the joints illustrated in FIG. 37. In the following description, a joint with a number n is referred to as a joint n.

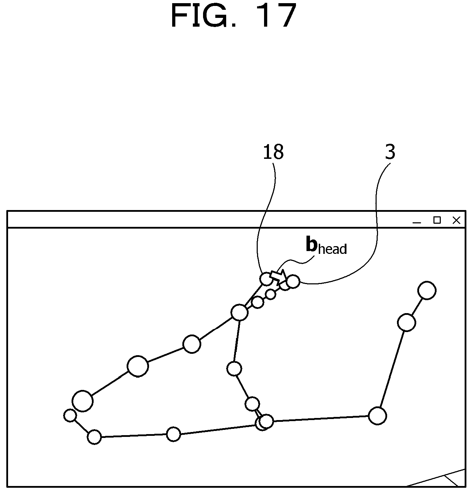

The "bone length abnormality detection" will be described. FIG. 17 is a diagram for describing processing of detecting a bone length abnormality. The abnormality detection unit 155 calculates a vector $b_{head}$ directed from the joint 18 to the joint 3 among the respective joints included in pre-replacement skeleton information. From the vector $b_{head}$, the abnormality detection unit 155 calculates a norm $|b_{head}|$ thereof.

It is assumed that a result of the bone length abnormality detection related to the pre-replacement skeleton information is $C_1$. For example, in a case where the norm $|b_{head}|$ calculated from the pre-replacement skeleton information is included in a range of $Th_1^{low}$ to $Th_1^{high}$, the abnormality detection unit 155 sets $C_1$ to 0 as normal. In a case where the norm $|b_{head}|$ calculated from the pre-replacement skeleton information is not included in the range of $Th_1^{low}$ to $Th_1^{high}$, the abnormality detection unit 155 sets $C_1$ to 1 as abnormal.

The abnormality detection unit 155 similarly calculates the norm $|b_{head}|$ for post-replacement skeleton information. It is assumed that a result of the bone length abnormality detection related to the post-replacement skeleton information is $C'_1$. For example, in a case where the norm $|b_{head}|$ calculated from the post-replacement skeleton information is included in the range of $Th_1^{low}$ to $Th_1^{high}$, the abnormality detection unit 155 sets $C'_1$ to 0 as normal. In a case where the norm $|b_{head}|$ calculated from the post-replacement skeleton information is not included in the range of $Th_1^{low}$ to $Th_1^{high}$, the abnormality detection unit 155 sets $C'_1$ to 1 as abnormal.

Here, $Th_1^{low}$ to $Th_1^{high}$ may be defined using a $3\sigma$ method. Using an average $\mu$ and a standard deviation $\sigma$ calculated from head length data of a plurality of persons, $Th_1^{low}$ may be defined as in Expression (4). $Th_1^{high}$ may be defined as in Expression (5).

[Expression 4]

$$Th_1^{low} = \mu - 3\sigma \qquad \cdots (4)$$

[Expression 5]

$$Th_1^{high} = \mu + 3\sigma \qquad \cdots (5)$$

The $3\sigma$ method is a determination method in which a case where object data deviates by three times or more of a standard deviation is determined to be abnormal. By using the $3\sigma$ method, since normal corresponds to a head length of almost all people (99.74%), it is possible to detect an abnormality such as an extremely long or short head.

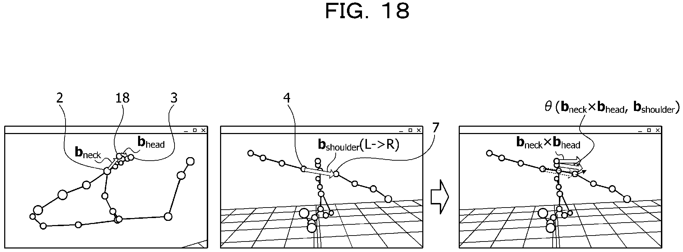

The "reverse/lateral bend abnormality detection" will be described. FIG. 18 is a diagram for describing processing of detecting a reverse/lateral bend abnormality. The abnormality detection unit 155 calculates a vector $b_{head}$ directed from the joint 18 to the joint 3 among the respective joints included in pre-replacement skeleton information. The abnormality detection unit 155 calculates a vector $b_{neck}$ directed from the joint 2 to the joint 18 among the respective joints included in pre-replacement skeleton information. The abnormality detection unit 155 calculates a vector $b_{shoulder}$ directed from the joint 4 to the joint 7 among the respective joints included in pre-replacement skeleton information.

From $b_{neck}$ and $b_{head}$, the abnormality detection unit 155 calculates a normal vector $b_{neck} \times b_{head}$ thereof. An outer product is indicated by "$\times$". The abnormality detection unit 155 calculates a formed angle $\theta$ ($b_{neck} \times b_{head}$, $b_{shoulder}$) formed by "$b_{neck} \times b_{head}$" and "$b_{shoulder}$".

It is assumed that a result of the reverse/lateral bend abnormality detection related to the pre-replacement skeleton information is $C_2$. For example, in a case where the formed angle $\theta$ ($b_{neck} \times b_{head}$, $b_{shoulder}$) is equal to or smaller than $Th_2$, the abnormality detection unit 155 sets $C_2$ to 0 as normal. In a case where the formed angle $\theta$ ($b_{neck} \times b_{head}$, $b_{shoulder}$) is greater than $Th_2$, the abnormality detection unit 155 sets $C_2$ to 1 as abnormal.

The abnormality detection unit 155 similarly calculates the formed angle $\theta$ ($b_{neck} \times b_{head}$, $b_{shoulder}$) for post-replacement skeleton information. It is assumed that a result of the reverse/lateral bend abnormality detection related to the post-replacement skeleton information is $C'_2$. For example, in a case where the formed angle $\theta$ ($b_{neck} \times b_{head}$, $b_{shoulder}$) is equal to or smaller than $Th_2$, the abnormality detection unit 155 sets $C'_2$ to 0 as normal. In a case where the formed angle $\theta$ ($b_{neck} \times b_{head}$, $b_{shoulder}$) is greater than $Th_2$, the abnormality detection unit 155 sets $C'_2$ to 1 as abnormal.

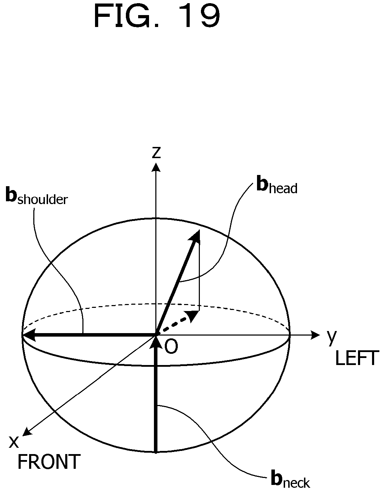

FIGs. 19 to 22 are diagrams for supplementarily describing each vector used in the reverse/lateral bend abnormality detection. For each coordinate system illustrated in FIG. 19, a coordinate system of x corresponds to a direction of a front of the player H1. A coordinate system of y corresponds to a left direction of the player H1. A coordinate system of z indicates the same direction as that of $b_{neck}$. The relationship among $b_{neck}$, $b_{read}$, and $b_{shoulder}$ illustrated in FIG. 18 is a relationship indicating $b_{neck}$, $b_{head}$, and $b_{shoulder}$ illustrated in FIG. 19.

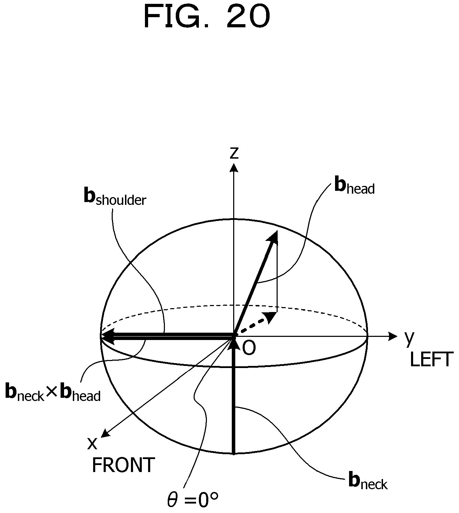

Description of FIG. 20 will be made. FIG. 20 illustrates an example of "normal". Each coordinate system illustrated in FIG. 20 is similar to the coordinate system described with reference to FIG. 19. In the example illustrated in FIG. 20, the formed angle $\theta$ ($b_{neck} \times b_{head}$, $b_{shoulder}$) is 0 (deg).

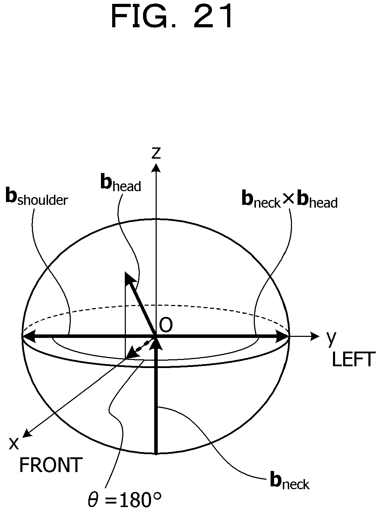

Description of FIG. 21 will be made. FIG. 21 illustrates an example of "reverse bend". Each coordinate system illustrated in FIG. 21 is similar to the coordinate system described with reference to FIG. 19. In the example illustrated in FIG. 21, the formed angle θ ($b_{neck} \times b_{head}$, $b_{shoulder}$) is 180 (deg).

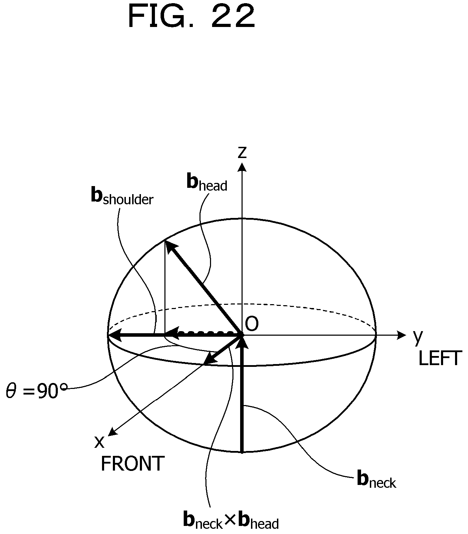

Description of FIG. 22 will be made. FIG. 22 illustrates an example of "lateral bend". Each coordinate system illustrated in FIG. 22 is similar to the coordinate system described with reference to FIG. 19. In the example illustrated in FIG. 22, the formed angle θ ($b_{neck} \times b_{head}$, $b_{shoulder}$) is 90 (deg).

Here, regarding the formed angle θ ($b_{neck} \times b_{head}$, $b_{shoulder}$) to be compared with the threshold $Th_2$, 0 (deg) is taken for backward bend that is desired to be regarded as normal, and 180 (deg) is taken for reverse bend and 90 (deg) is taken for lateral bend that are desired to be regarded as abnormal. Thus, in a case where it is desired to make both the reverse bend and the lateral bend abnormal, $Th_2$ = 90 (deg) is set.

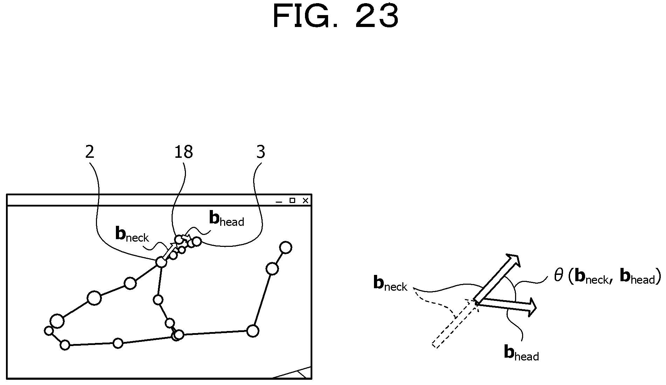

The "excessive bend abnormality detection" will be described. FIG. 23 is a diagram for describing processing of detecting an excessive bend abnormality. A vector $b_{head}$ directed from the joint 18 to the joint 3 is calculated among the respective joints included in pre-replacement skeleton information. The abnormality detection unit 155 calculates a vector $b_{neck}$ directed from the joint 2 to the joint 18 among the respective joints included in the pre-replacement skeleton information.

From $b_{neck}$ and $b_{head}$, the abnormality detection unit 155 calculates a formed angle θ ($b_{neck}$ $b_{head}$) thereof.

It is assumed that a result of the excessive bend abnormality detection related to the pre-replacement skeleton information is $C_3$. For example, in a case where the formed angle θ ($b_{neck}$ $b_{head}$) is equal to or smaller than $Th_3$, the abnormality detection unit 155 sets $C_3$ to 0 as normal. In a case where the formed angle θ ($b_{neck}$ $b_{head}$) is greater than $Th_3$, the abnormality detection unit 155 sets $C_3$ to 1 as abnormal.

For example, since a movable range of a head is 60 (deg) at the maximum, $Th_3$ = 60 (deg) is set.

The abnormality detection unit 155 similarly calculates the formed angle θ ($b_{neck}$, $b_{head}$) for post-replacement skeleton information. It is assumed that a result of the excessive bend abnormality detection related to the post-replacement skeleton information is $C'_3$. For example, in a case where the formed angle θ ($b_{neck}$ $b_{head}$) is equal to or smaller than $Th_3$, the abnormality detection unit 155 sets $C'_3$ to 0 as normal. In a case where the formed angle θ ($b_{neck}$ $b_{head}$) is greater than $Th_3$, the abnormality detection unit 155 sets $C'_3$ to 1 as abnormal.

As described above, the abnormality detection unit 155 sets a value to $C_1$ ($C'_1$) based on a condition of Expression (6) for the bone length abnormality detection. The abnormality detection unit 155 sets a value to $C_2$ ($C'_2$) based on a condition of Expression (7) for the reverse/lateral bend abnormality detection. The abnormality detection unit 155 sets a value to $C_3$ ($C'_3$) based on a condition of Expression (8) for the excessive bend abnormality detection.

[Expression 6]

$$C_1 = \begin{cases} 0 & if\ Th_1^{low} \leq |\boldsymbol{b}_{head}|\ and\ |\boldsymbol{b}_{head}| \leq Th_1^{high} \\ 1 & if\ Th_1^{high} < |\boldsymbol{b}_{head}|\ or\ |\boldsymbol{b}_{head}| < Th_1^{low} \end{cases} \quad \cdots (6)$$

[Expression 7]

$$C_2 = \begin{cases} 0 & if\ \theta(\boldsymbol{b}_{neck} \times \boldsymbol{b}_{head}, \boldsymbol{b}_{shoulder}) \leq Th_2 \\ 1 & if\ \theta(\boldsymbol{b}_{neck} \times \boldsymbol{b}_{head}, \boldsymbol{b}_{shoulder}) > Th_2 \end{cases} \quad \cdots (7)$$

[Expression 8]

$$C_3 = \begin{cases} 0 & if\ \theta(\boldsymbol{b}_{neck}, \boldsymbol{b}_{head}) \leq Th_3 \\ 1 & if\ \theta(\boldsymbol{b}_{neck}, \boldsymbol{b}_{head}) > Th_3 \end{cases} \quad \cdots (8)$$

The abnormality detection unit 155 calculates determination results $D_1$, $D_2$, and $D_3$ after executing the "bone length abnormality detection", the "reverse/lateral bend abnormality detection", and the "excessive bend abnormality detection". The abnormality detection unit 155 calculates the determination result $D_1$ based on Expression (9). The abnormality detection unit 155 calculates the determination result $D_2$ based on Expression (10). The determination result $D_3$ is calculated based on Expression (11).

[Expression 9]

$$D_1 = \begin{cases} 1 & if\ C_1 == 0\ and\ C'_1 == 1 \\ 0 & else \end{cases} \quad \cdots (9)$$

[Expression 10]

$$D_2 = \begin{cases} 1 & if\ C_2 == 0\ and\ C'_2 == 1 \\ 0 & else \end{cases} \qquad \cdots (10)$$

[Expression 11]

$$D_3 = \begin{cases} 1 & if\ C_3 == 0\ and\ C'_3 == 1 \\ 0 & else \end{cases} \qquad \cdots (11)$$

In a case where "1" is set to any one of the determination results $D_1$ to $D_3$, the abnormality detection unit 155 detects an abnormality of the top of the head for the 3D skeleton information. In a case where the abnormality of the top of the head is detected, the abnormality detection unit 155 outputs the 3D skeleton information to the correction unit 156.

On the other hand, in a case where "0" is set to all of the determination results $D_1$ to $D_3$, the abnormality detection unit 155 determines that no abnormality of the top of the head occurs for the 3D skeleton information. In a case where the abnormality of the top of the head is not detected, the abnormality detection unit 155 registers a frame number and the 3D skeleton information (post-replacement skeleton information) in the skeleton recognition result table 142 in association with each other.

The abnormality detection unit 155 repeatedly executes the processing described above each time the 3D skeleton information is acquired from the estimation unit 154.

The description returns to FIG. 9. The correction unit 156 corrects, in a case where 3D skeleton information in which an abnormality of the top of the head is detected by the abnormality detection unit 155 is acquired, the acquired 3D skeleton information. Here, description will be made using post-replacement skeleton information as the 3D skeleton information.

For example, the correction executed by the correction unit 156 includes "bone length correction", "reverse/lateral bend correction", and "excessive bend correction".

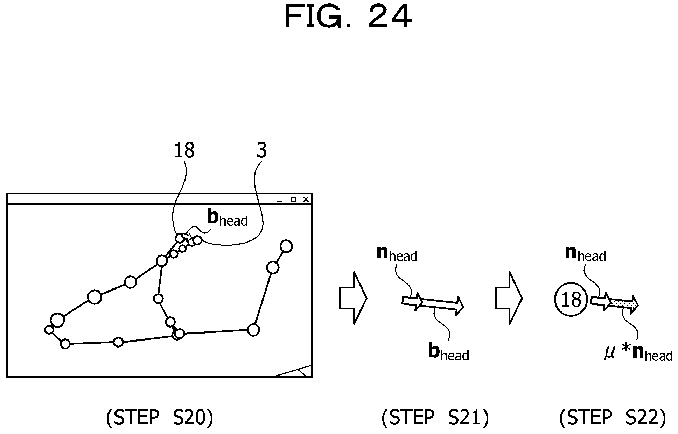

The "bone length correction" will be described. FIG. 24 is a diagram for describing the bone length correction. As illustrated in FIG. 24, the correction unit 156 performs processing in the order of step S20, step S21, and step S22.

Step S20 will be described. The correction unit 156 calculates a vector $b_{head}$ directed from the joint 18 to the joint 3 among the respective joints included in the post-replacement skeleton information.

Step S21 will be described. From the vector $b_{head}$, the correction unit 156 calculates a unit vector $n_{head}$ ($n_{head} = b_{head}/|b_{head}|$) thereof.

Step S22 will be described. The correction unit 156 outputs, as the corrected top of the head, a joint extended by an average $\mu$ of bone lengths calculated in past image frames in a direction of the unit vector $n_{head}$ from the joint 18 as a reference (updates the position of the top of the head in the post-replacement skeleton information). Since $\mu$ is in a normal range, the bone length becomes normal.

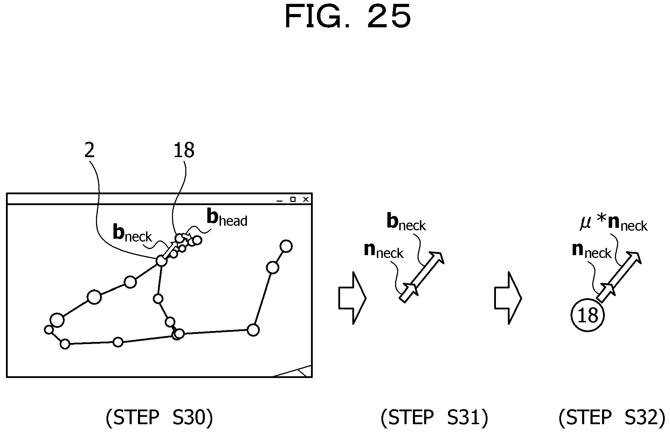

The "reverse/lateral bend correction" will be described. FIG. 25 is a diagram for describing the reverse/lateral bend correction. As illustrated in FIG. 25, the correction unit 156 performs processing in the order of step S30, step S31, and step S32.

Step S30 will be described. The correction unit 156 calculates a vector $b_{neck}$ directed from the joint 2 to the joint 18 among the respective joints included in the post-replacement skeleton information.

Step S31 will be described. From the vector $b_{neck}$, the correction unit 156 calculates a unit vector $n_{neck}$ ($n_{neck} = b_{neck}/|b_{neck}|$) thereof.

Step S32 will be described. The correction unit 156 outputs, as the top of the head, a result of correction by extension by a standard bone length $\mu$ in a direction of the unit vector $n_{neck}$ from the joint 18 as a reference so as to fall within a threshold (updates the position of the top of the head in the post-replacement skeleton information). Since the head extends in the same direction as that of the neck, a reverse/lateral abnormality is corrected.

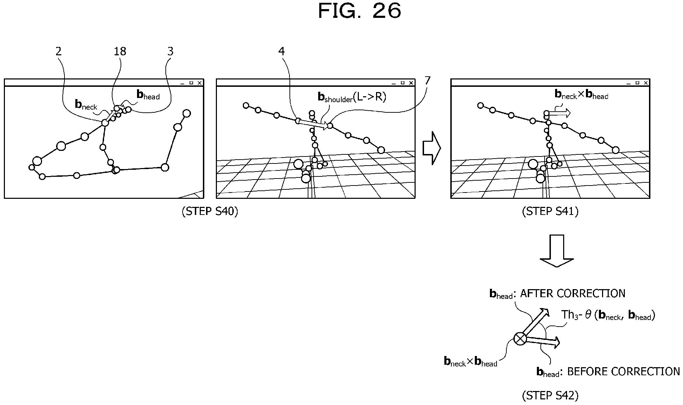

The "excessive bend correction" will be described. FIG. 26 is a diagram for describing the excessive bend correction. As illustrated in FIG. 26, the correction unit 156 performs processing in the order of step S40, step S41, and step S42.

Step S40 will be described. The correction unit 156 calculates a vector $b_{head}$ directed from the joint 18 to the joint 3 among the respective joints included in the post-replacement skeleton information. The correction unit 156 calculates a vector $b_{neck}$ directed from the joint 2 to the joint 18 among the respective joints included in the post-replacement skeleton information. The correction unit 156 calculates a vector $b_{shoulder}$ directed from the joint 4 to the joint 7 among the respective joints included in the post-replacement skeleton information.

Step S41 will be described. From the vector $b_{neck}$ and the vector $b_{head}$, the correction unit 156 calculates a normal vector $b_{neck} \times b_{head}$ thereof.

Step S42 will be described. It is assumed that the normal vector $b_{neck} \times b_{head}$ is a vector extending from the front toward the back. The correction unit 156 outputs, as the top of the head, a result of correction by rotating the vector $b_{head}$ about the normal vector $b_{neck} \times b_{head}$ as an axis by a residual from the threshold $Th_3$ "$Th_3$ - formed angle $\theta$ ($b_{neck}$, $b_{head}$)" (deg) so as to fall within the threshold (updates the position of the top of the head in the post-replacement skeleton information). Since the angle falls within the threshold, an excessive bend abnormality is corrected.

By executing the correction described above, the correction unit 156 executes the "bone length correction", the "reverse/lateral bend correction", and the "excessive bend correction" to correct the 3D skeleton information. The correction unit 156 registers a frame number and the corrected 3D skeleton information in the skeleton recognition result table 142 in association with each other.

The description returns to FIG. 9. The technique recognition unit 157 acquires pieces of 3D skeleton information from the skeleton recognition result table 142 in the order of a frame number, and specifies a time-series change of each of joint coordinates based on the consecutive pieces of 3D skeleton information. The technique recognition unit 157 compares a time-series change of each joint position with the technique recognition table 143 to specify a technique type. Furthermore, the technique recognition unit 157 compares a combination of technique types with the technique recognition table 143 to calculate a score of a performance of the player H1.

The score of the performance of the player H1 calculated by the technique recognition unit 157 also includes a score of a performance for which time-series conversion of the top of the head is evaluated, such as a ring leap in a balance beam or a part of a performance in a floor exercise.

The technique recognition unit 157 generates screen information based on the score of the performance and 3D skeleton information from a start to an end of the performance. The technique recognition unit 157 outputs the generated screen information to the display unit 130 to display.

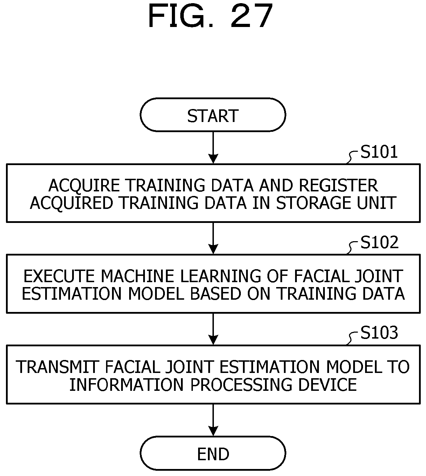

Next, an example of a processing procedure of the training device 50 according to the present first embodiment will be described. FIG. 27 is a flowchart illustrating the processing procedure of the training device according to the present first embodiment. As illustrated in FIG. 27, the acquisition unit 55a of the training device 50 acquires the training data 54a, and registers the acquired training data 54a in the storage unit 54 (step S101).

The training unit 55b of the training device 50 executes machine learning corresponding to the facial joint estimation model 54b based on the training data 54a (step S102).

The output unit 55c of the training device 50 transmits the facial joint estimation model to the information processing device 100 (step S103).

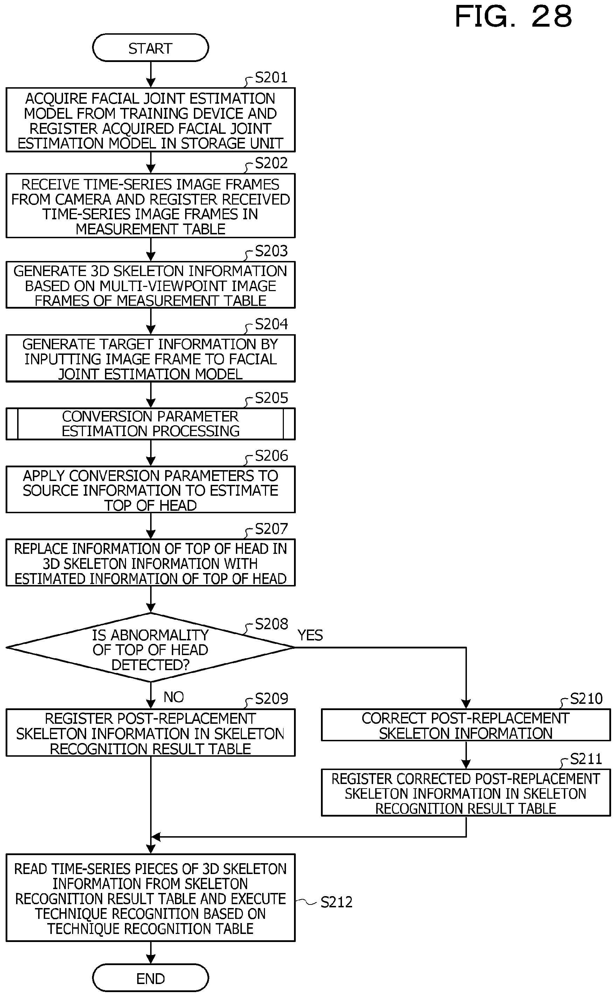

Next, an example of a processing procedure of the information processing device 100 according to the present first embodiment will be described. FIG. 28 is a flowchart illustrating the processing procedure of the information processing device according to the present first embodiment. As illustrated in FIG. 28, the acquisition unit 151 of the information processing device 100 acquires the facial joint estimation model 54b from the training device 50, and registers the acquired facial joint estimation model 54b in the storage unit 140 (Step S201).

The acquisition unit 151 receives time-series image frames from the camera, and registers the received time-series image frames in the measurement table 141 (step S202).

The preprocessing unit 152 of the information processing device 100 generates 3D skeleton information based on the multi-viewpoint image frames of the measurement table 141 (step S203). The target information generation unit 153 of the information processing device 100 generates target information by inputting an image frame to the facial joint estimation model 54b (step S204).

The estimation unit 154 of the information processing device 100 executes conversion parameter estimation processing (step S205). The estimation unit 154 applies conversion parameters to the source information 60a to estimate a top of a head (step S206). The estimation unit 154 replaces information of the top of the head in the 3D skeleton information with estimated information of the top of the head (step S207).

The abnormality detection unit 155 of the information processing device 100 determines whether or not an abnormality of the top of the head is detected (step S208). In a case where the abnormality of the top of the head is not detected (step S208, No), the abnormality detection unit 155 registers post-replacement skeleton information in the skeleton recognition result table 142 (step S209), and proceeds to step S212.

On the other hand, in a case where the abnormality of the top of the head is detected (step S208, Yes), the abnormality detection unit 155 proceeds to step S210. The correction unit 156 of the information processing device 100 corrects the post-replacement skeleton information (step S210). The correction unit 156 registers the corrected post-replacement skeleton information in the skeleton recognition result table 142 (step S211), and proceeds to step S212.

The technique recognition unit 157 of the information processing device 100 reads time-series pieces of 3D skeleton information from the skeleton recognition result table 142, and executes technique recognition based on the technique recognition table 143 (step S212).

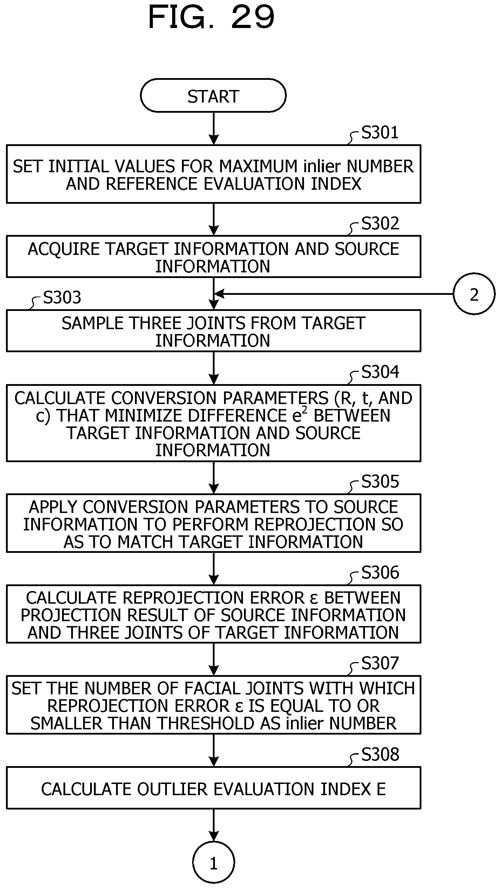

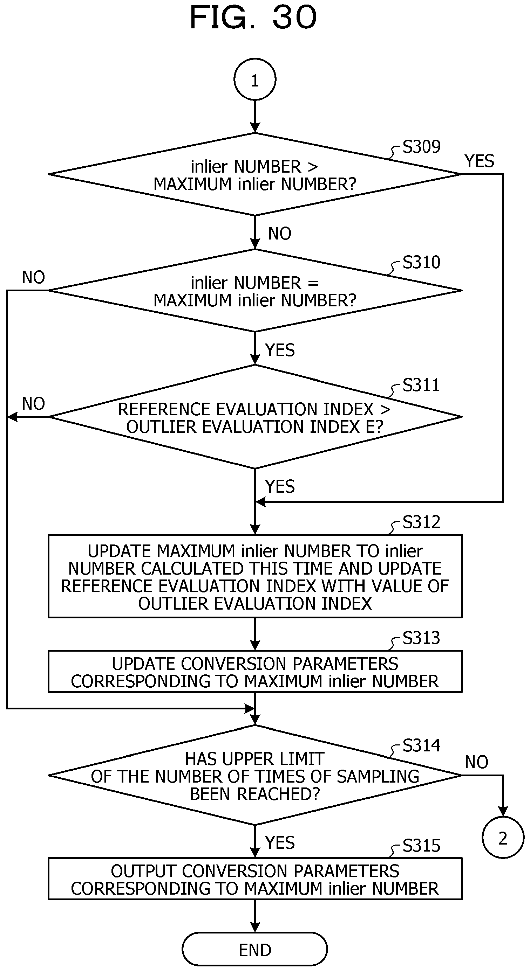

Next, an example of a processing procedure of the conversion parameter estimation processing indicated in step S205 of FIG. 28 will be described. FIGs. 29 and 30 are flowcharts illustrating the processing procedure of the conversion parameter estimation processing.

FIG. 29 will be described. The estimation unit 154 of the information processing device 100 sets initial values for the maximum inlier number and a reference evaluation index (step S301). For example, the estimation unit 154 sets the maximum inlier number to "0" and the reference evaluation index to "∞ (large value)".

The estimation unit 154 acquires the target information and the source information (step S302). The estimation unit 154 samples three joints from the target information (step S303). The estimation unit 154 calculates conversion parameters (R, t, and c) that minimize the difference $e^2$ between the target information and the source information based on Expression (1) (step S304).

The estimation unit 154 applies the conversion parameters to the source information to perform reprojection so as to match the target information (step S305). The estimation unit 154 calculates the reprojection error ε between a projection result of the source information and the three joints of the target information (step S306).

The estimation unit 154 sets the number of facial joints with which the reprojection error ε is equal to or smaller than a threshold as the inlier number (step S307). The estimation unit 154 calculates an outlier evaluation index (step S308). The estimation unit 154 proceeds to Step S309 of FIG. 30.

The description proceeds to FIG. 30. In a case where the inlier number is greater than the maximum inlier number (Step S309, Yes), the estimation unit 154 proceeds to step S312. On the other hand, in a case where the inlier number is not greater than the maximum inlier number (Step S309, No), the estimation unit 154 proceeds to step S310.

In a case where the inlier number and the maximum inlier number are the same (Step S310, Yes), the estimation unit 154 proceeds to step S311. On the other hand, in a case where the inlier number and the maximum inlier number are not the same (Step S310, No), the estimation unit 154 proceeds to step S314.

In a case where the outlier evaluation index E is not smaller than the reference evaluation index (Step S311, No), the estimation unit 154 proceeds to step S314. On the other hand, in a case where the outlier evaluation index E is smaller than the reference evaluation index (Step S311, Yes), the estimation unit 154 proceeds to step S312.

The estimation unit 154 updates the maximum inlier number to the inlier number calculated this time, and updates the reference evaluation index with a value of the outlier evaluation index (step S312). The estimation unit 154 updates the conversion parameters corresponding to the maximum inlier number (step S313).

In a case where an upper limit of the number of times of sampling has not been reached (step S314, No), the estimation unit 154 proceeds to step S303 of FIG. 29. On the other hand, in a case where the upper limit of the number of times of sampling has been reached (step S314, Yes), the estimation unit 154 outputs the conversion parameters corresponding to the maximum inlier number (step S315).

Next, an effect of the information processing device 100 according to the present first embodiment will be described. The information processing device 100 calculates the conversion parameters for aligning the positions of the facial joints of the source information 60a with the positions of the facial joints of the target information 60b. The information processing device 100 calculates the position of the top of the head of the player by applying the calculated conversion parameters to the top of the head of the source information 60a. Since the relationship between the facial joints and the top of the head is the rigid body relationship, the estimation accuracy may be improved by estimating the position of the top of the head of the player using such a relationship.

For example, as described with reference to FIG. 6, even in a case where appearance, hair disorder, occlusion, or the like occurs in an image, the estimation accuracy of the top of the head is improved as compared with the conventional technology. Since the estimation accuracy of the top of the head is improved by the information processing device 100, also in a case where a performance of the player is evaluated using the top of the head, it is possible to appropriately evaluate success or failure of the performance. The performance of the player using the top of the head includes a ring leap in a balance beam and a part of a performance in a floor exercise.

Furthermore, the information processing device 100 according to the present first embodiment specifies the conversion parameters based on the inlier number and the outlier error index E. Thus, even in a case where a plurality of conversion parameters in which the inlier number is the same exists, optimum conversion parameters may be selected using the outlier error index E.

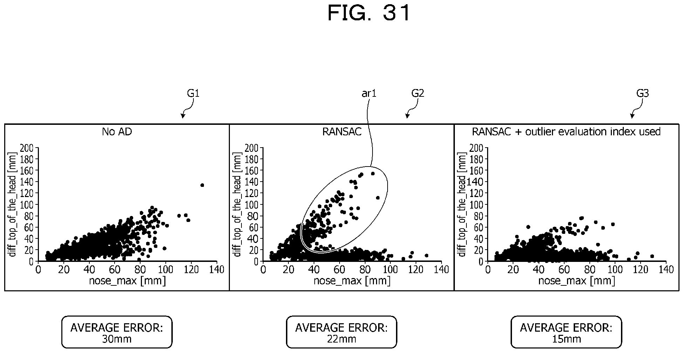

FIG. 31 is a diagram for describing a comparison result of errors in estimation of the top of the head. A graph G1 in FIG. 31 illustrates an error in a case where the top of the head is estimated without executing the RANSAC. A graph G2 illustrates an error in a case where the RANSAC is executed to estimate the top of the head. A graph G3 illustrates an error in a case where the estimation unit 154 according to the present first embodiment estimates the top of the head. Horizontal axes of the graphs G1 and G2 correspond to the maximum value of an error between the facial joints of the target information and GT (correct positions of the facial joints). Vertical axes of the graphs G1 and G2 indicate an error between an estimation result of the top of the head and GT (a correct position of the top of the head).

In the graph G1, an average error of the errors between the estimation result of the top of the head and the GT is "30 mm". In the graph G2, an average error of the errors between the estimation result of the top of the head and the GT is "22 mm". In the graph G3, an average error of the errors between the estimation result of the top of the head and the GT is "15 mm". In other words, the information processing device 100 according to the present first embodiment may estimate the position of the top of the head with high accuracy as compared with the conventional technologies such as the RANSAC. For example, in an area ar1 of the graph G2, it is indicated that removal of outliers has failed.

In a case where an abnormality of the top of the head in the 3D skeleton information is detected, the information processing device 100 according to the present first embodiment executes the processing of correcting the position of the top of the head. As a result, the estimation accuracy of the 3D skeleton information may be further improved.

Note that, in the present first embodiment, the case where the correction unit 156 corrects the post-replacement skeleton information has been described as an example, but the pre-replacement skeleton information may be corrected and the corrected pre-replacement skeleton information may be output. Furthermore, the correction unit 156 may output the pre-replacement skeleton information as it is as the corrected skeleton information without actually performing the correction.

[Second Embodiment]

Next, the present second embodiment will be described. A system related to the present second embodiment is similar to the system in the first embodiment. Subsequently, an information processing device according to the present second embodiment will be described. The information processing device according to the present second embodiment includes a plurality of candidates for a top of a head, unlike the source information of the first embodiment.

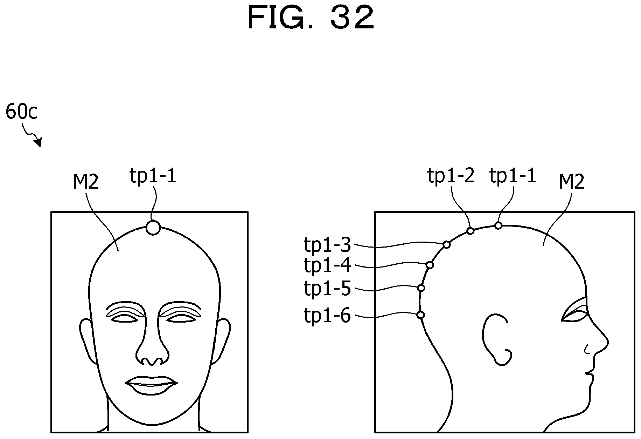

FIG. 32 is a diagram illustrating an example of source information according to the present second embodiment. As illustrated in FIG. 32, source information 60c includes a plurality of head top joint candidates tp1-1, tp1-2, tp1-3, tp1-4, tp1-5, and tp1-6 in a 3D human body model M2. Although not illustrated in FIG. 32, positions of a plurality of facial joints are set in the source information 60c similarly to the source information 60a indicated in the first embodiment.

The information processing device calculates conversion parameters in a manner similar to that in the first embodiment. The information processing device applies the calculated conversion parameters to the source information 60c, compares the respective values in a z-axis direction of the plurality of head top joint candidates tp1-1 to tp1-6, and specifies a head top joint candidate having the minimum value in the z-axis direction as the top of the head.

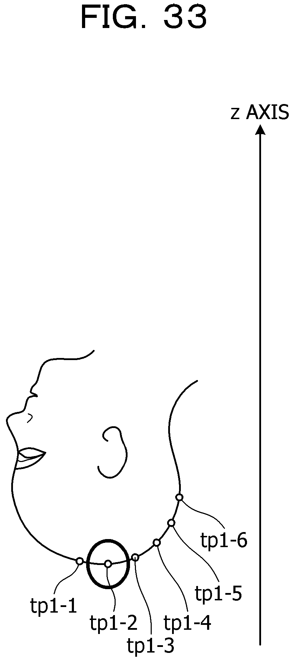

FIG. 33 is a diagram for describing processing of specifying the top of the head. In the example illustrated in FIG. 33, a result of applying the conversion parameters to the source information 60c is illustrated. Since a value of the head top joint candidate tp1-2 is the minimum among the values in the z-axis direction of the plurality of head top joint candidates tp1-1 to tp1-6, the information processing device selects the head top joint candidate tp1-2 as the top of the head.

As described above, the information processing device according to the present second embodiment applies the conversion parameters to the source information 60c, compares the respective values in the z-axis direction of the plurality of head top joint candidates tp1-1 to tp1-6, and specifies a position of the head top joint candidate having the minimum value in the z-axis direction as the position of the top of the head. As a result, it is possible to more appropriately select the position of the top of the head in a case where a performance of turning the top of the head downward, such as a ring leap, is evaluated.

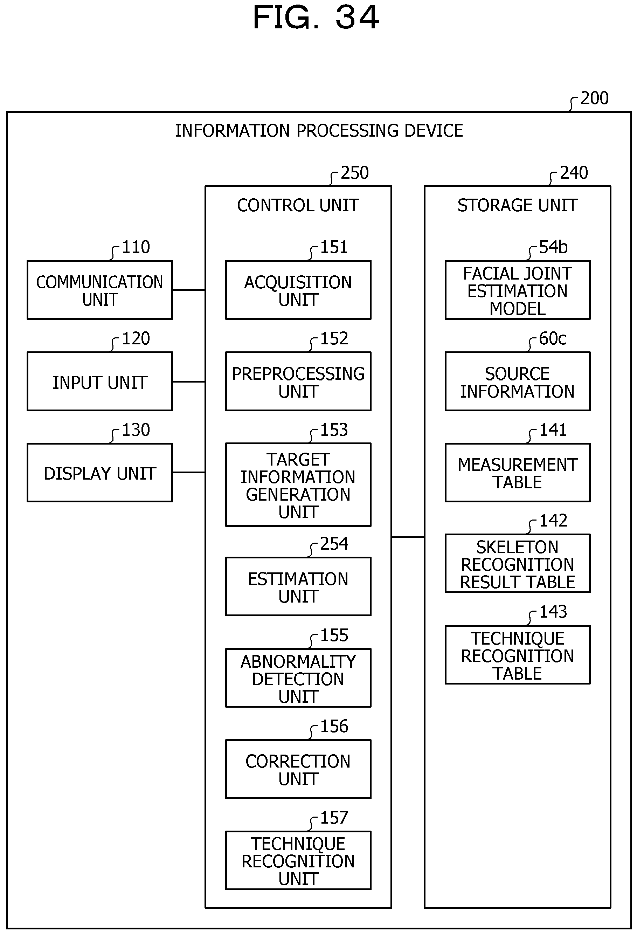

Next, a configuration of the information processing device according to the present second embodiment will be described. FIG. 34 is a functional block diagram illustrating the configuration of the information processing device according to the present second embodiment. As illustrated in FIG. 34, an information processing device 200 includes a communication unit 110, an input unit 120, a display unit 130, a storage unit 240, and a control unit 250.

Description regarding the communication unit 110, the input unit 120, and the display unit 130 are similar to the description regarding the communication unit 110, the input unit 120, and the display unit 130 described with reference to FIG. 9.

The storage unit 240 includes a facial joint estimation model 54b, the source information 60c, a measurement table 141, a skeleton recognition result table 142, and a technique recognition table 143. The storage unit 240 corresponds to a semiconductor memory element such as a RAM or a flash memory, or a storage device such as an HDD.

Description regarding the facial joint estimation model 54b, the measurement table 141, the skeleton recognition result table 142, and the technique recognition table 143 is similar to the description regarding the facial joint estimation model 54b, the measurement table 141, the skeleton recognition result table 142, and the technique recognition table 143 described with reference to FIG. 9.

As described with reference to FIG. 32, the source information 60c is information in which each of the positions of the plurality of facial joints and the positions of the plurality of head top joint candidates is set.

The control unit 250 includes an acquisition unit 151, a preprocessing unit 152, a target information generation unit 153, an estimation unit 254, an abnormality detection unit 155, a correction unit 156, and a technique recognition unit 157. The control unit 250 corresponds to a CPU or the like.

Description regarding the acquisition unit 151, the preprocessing unit 152, the target information generation unit 153, the abnormality detection unit 155, the correction unit 156, and the technique recognition unit 157 is similar to the description regarding the acquisition unit 151, the preprocessing unit 152, the target information generation unit 153, the abnormality detection unit 155, the correction unit 156, and the technique recognition unit 157 described with reference to FIG. 9.

The estimation unit 254 estimates a position of a top of a head of a player H1 based on the source information 60c and target information 60b (target information specific to an image frame).

The estimation unit 254 compares the positions of the facial joints of the source information 60c with positions of facial joints (three joints) of the target information 60b, and calculates conversion parameters (rotation R, translation t, and scale c) that minimize the difference $e^2$ in Expression (1) described above. The processing of calculating the conversion parameters by the estimation unit 254 is similar to that of the estimation unit 154 of the first embodiment.

The estimation unit 254 applies the conversion parameters to the source information 60c as described with reference to FIG. 33. The estimation unit 254 compares the respective values in the z-axis direction of the plurality of head top joint candidates tp1-1 to tp1-6, and specifies a position a head top joint candidate having the minimum value in the z-axis direction as the position of the top of the head.

Through the processing described above, the estimation unit 254 estimates a position of face coordinates (the positions of the facial joints and the position of the top of the head) of the player H1, and generates 3D skeleton information by replacing information of the head in the 3D skeleton information estimated by the preprocessing unit 152 with information of the position of the face coordinates. The estimation unit 254 outputs the generated 3D skeleton information to the abnormality detection unit 155. Furthermore, the estimation unit 254 also outputs the 3D skeleton information before the replacement with the information of the position of the face coordinates to the abnormality detection unit 155.

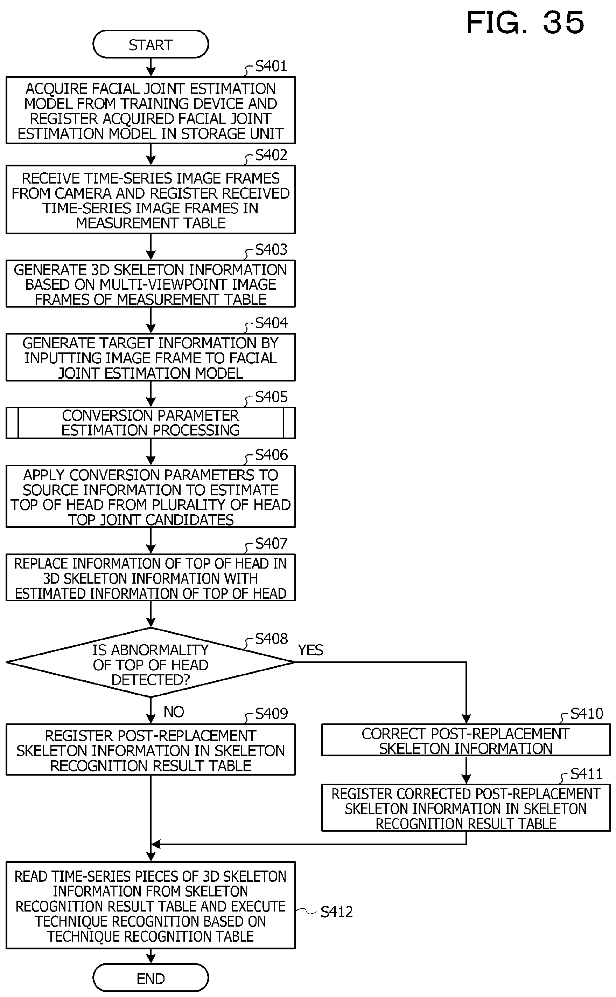

Next, an example of a processing procedure of the information processing device 200 according to the present second embodiment will be described. FIG. 35 is a flowchart illustrating the processing procedure of the information processing device according to the present second embodiment. As illustrated in FIG. 35, the acquisition unit 151 of the information processing device 200 acquires the facial joint estimation model 54b from a training device 50, and registers the acquired facial joint estimation model 54b in the storage unit 240 (Step S401).

The acquisition unit 151 receives time-series image frames from a camera, and registers the received time-series image frames in the measurement table 141 (step S402).

The preprocessing unit 152 of the information processing device 200 generates 3D skeleton information based on the multi-viewpoint image frames of the measurement table 141 (step S403). The target information generation unit 153 of the information processing device 200 generates target information by inputting an image frame to the facial joint estimation model 54b (step S404).

The estimation unit 254 of the information processing device 200 executes conversion parameter estimation processing (step S405). The estimation unit 254 applies conversion parameters to the source information 60c to estimate a top of a head from a plurality of head top joint candidates (step S406). The estimation unit 254 replaces information of the top of the head in the 3D skeleton information with estimated information of the top of the head (step S407).

The abnormality detection unit 155 of the information processing device 200 determines whether or not an abnormality of the top of the head is detected (step S408). In a case where the abnormality of the top of the head is not detected (step S408, No), the abnormality detection unit 155 registers post-replacement skeleton information in the skeleton recognition result table 142 (step S409), and proceeds to step S412.

On the other hand, in a case where the abnormality of the top of the head is detected (step S408, Yes), the abnormality detection unit 155 proceeds to step S410. The correction unit 156 of the information processing device 200 corrects the post-replacement skeleton information (step S410). The correction unit 156 registers the corrected post-replacement skeleton information in the skeleton recognition result table 142 (step S411), and proceeds to step S412.

The technique recognition unit 157 of the information processing device 200 reads time-series pieces of 3D skeleton information from the skeleton recognition result table 142, and executes technique recognition based on the technique recognition table 143 (step S412).

The conversion parameter estimation processing indicated in step S405 of FIG. 35 corresponds to the conversion parameter estimation processing indicated in FIGs. 29 and 30 of the first embodiment.

Next, an effect of the information processing device 200 according to the present second embodiment will be described. The information processing device 200 applies the conversion parameters to the source information 60c, compares the respective values in the z-axis direction of the plurality of head top joint candidates, and specifies the head top joint candidate having the minimum value in the z-axis direction as the top of the head. As a result, it is possible to more appropriately select the position of the top of the head in a case where a performance of turning the top of the head downward, such as a ring leap, is evaluated.

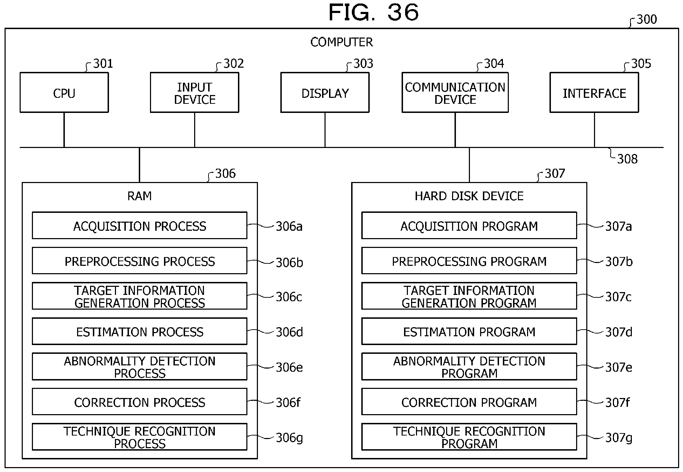

Next, an example of a hardware configuration of a computer that implements functions similar to those of the information processing device 100 (200) described in the embodiments described above will be described. FIG. 36 is a diagram illustrating an example of the hardware configuration of the computer that implements the functions similar to those of the information processing device.

As illustrated in FIG. 36, a computer 300 includes a CPU 301 that executes various types of arithmetic processing, an input device 302 that accepts data input from a user, and a display 303. Furthermore, the computer 300 includes a communication device 304 that receives distance image data from the camera 30, and an interface device 305 coupled to various devices. The computer 300 includes a RAM 306 that temporarily stores various types of information, and a hard disk device 307. Additionally, each of the devices 301 to 307 is coupled to a bus 308.

The hard disk device 307 includes an acquisition program 307a, a preprocessing program 307b, a target information generation program 307c, an estimation program 307d, an abnormality detection program 307e, a correction program 307f, and a technique recognition program 307g. The CPU 301 reads the acquisition program 307a, the preprocessing program 307b, the target information generation program 307c, the estimation program 307d, the abnormality detection program 307e, the correction program 307f, and the technique recognition program 307g, and develops them in the RAM 306.

The acquisition program 307a functions as an acquisition process 306a. The preprocessing program 307b functions as a preprocessing process 306b. The target information generation program 307c functions as a target information generation process 306c. The estimation program 307d functions as an estimation process 306d. The abnormality detection program 307e functions as an abnormality detection process 306e. The correction program 307f functions as a correction process 306f. The technique recognition program 307g functions as a technique recognition process 306g.

Processing of the acquisition process 306a corresponds to the processing of the acquisition unit 151. Processing of the preprocessing process 306b corresponds to the processing of the preprocessing unit 152. Processing of the target information generation process 306c corresponds to the processing of the target information generation unit 153. Processing of the estimation process 306d corresponds to the processing of the estimation units 154 and 254. Processing of the abnormality detection process 306e corresponds to the processing of the abnormality detection unit 155. Processing of the correction process 306f corresponds to the processing of the correction unit 156. Processing of the technique recognition process 306g corresponds to the processing of the technique recognition unit 157.

Note that each of the programs 307a to 307g is not necessarily stored in the hard disk device 307 beforehand. For example, each of the programs is stored in a "portable physical medium" such as a flexible disk (FD), a CD-ROM, a DVD disk, a magneto-optical disk, or an IC card to be inserted in the computer 300. Then, the computer 300 may read and execute each of the programs 307a to 307g.

REFERENCE SIGNS LIST

| | |
|---|---|
| 100, 200 | Information processing device |
| 110 | Communication unit |
| 120 | Input unit |
| 130 | Display unit |
| 140, 240 | Storage unit |
| 141 | Measurement table |
| 142 | Skeleton recognition result table |
| 143 | Technique recognition table |
| 150, 250 | Control unit |
| 151 | Acquisition unit |
| 152 | Preprocessing unit |
| 153 | Target information generation unit |
| 154, 254 | Estimation unit |
| 155 | Abnormality detection unit |
| 156 | Correction unit |
| 157 | Technique recognition unit |

**Claims**

1. An estimation program for causing a computer to execute processing comprising:

  specifying positions of a plurality of joints included in a face of a player by inputting an image in which a head of the player is in a predetermined state to a machine learning model (S 204);
  estimating a position of a top of the head of the player using each of the positions of the plurality of joints; and
  estimating, based on definition information that defines positions of a plurality of joints included in a face of a person and a top of a head of the person and recognition information that indicates the positions of the plurality of joints included in the face of the player, parameters to align the positions of the plurality of joints of the definition information with the positions of the plurality of joints of the recognition information (S205),
  wherein, in the processing of estimating the position of the top of the head, the position of the top of the head of the player is estimated based on the parameters and coordinates of the top of the head of the definition information (S206),

wherein the image input to the machine learning model is any one of an image in the predetermined state where a background color and a color of hair of the player are similar, an image in a state where the hair of the player is disordered, and an image in a state where the head of the player is hidden,

wherein the definition information includes a plurality of candidates of the top of the head, and in the processing of estimating the position of the top of the head, in a case where the parameters are applied to the definition information, a position of a candidate of the top of the head that has a minimum value in a vertical direction among the plurality of candidates of the top of the head is estimated as the position of the top of the head of the player.

2. The estimation program according to claim 1, for causing the computer to further execute processing comprising evaluating a performance related to a balance beam or a floor exercise based on the position of the top of the head.

3. The estimation program according to claim 1, for causing the computer to further execute processing comprising determining whether or not the position of the top of the head of the player estimated by the processing of estimating is abnormal (S208), and correcting the position of the top of the head of the player in a case where the position of the top of the head of the player is abnormal (S210).

4. An estimation method comprising:

specifying positions of a plurality of joints included in a face of a player by inputting an image in which a head of the player is in a predetermined state to a machine learning model (S204);

estimating a position of a top of the head of the player using each of the positions of the plurality of joints, and estimating, based on definition information that defines positions of a plurality of joints included in a face of a person and a top of a head of the person and recognition information that indicates the positions of the plurality of joints included in the face of the player, parameters to align the positions of the plurality of joints of the definition information with the positions of the plurality of joints of the recognition information (S205),

wherein, in the processing of estimating the position of the top of the head, the position of the top of the head of the player is estimated based on the parameters and coordinates of the top of the head of the definition information (S206),

wherein the image input to the machine learning model is any one of an image in the predetermined state where a background color and a color of hair of the player are similar, an image in a state where the hair of the player is disordered, and an image in a state where the head of the player is hidden,

wherein the definition information includes a plurality of candidates of the top of the head, and in the processing of estimating the position of the top of the head, in a case where the parameters are applied to the definition information, a position of a candidate of the top of the head that has a minimum value in a vertical direction among the plurality of candidates of the top of the head is estimated as the position of the top of the head of the player.

5. The estimation program according to claim 4, further comprising:
evaluating a performance related to a balance beam or a floor exercise based on the position of the top of the head.

6. The estimation method according to claim 4, further comprising:
determining whether or not the position of the top of the head of the player estimated by the processing of estimating is abnormal (S208); and
correcting the position of the top of the head of the player in a case where the position of the top of the head of the player is abnormal (S210).

7. An information processing device comprising:

a generation unit (153)configured to specify positions of a plurality of joints included in a face of a player by inputting an image in which a head of the player is in a predetermined state to a machine learning model (S204); and

a estimation unit (154) configured to estimate a position of a top of the head of the player using each of the positions of the plurality of joints;

estimate, based on definition information that defines positions of a plurality of joints included in a face of a person and a top of a head of the person and recognition information that indicates the positions of the plurality of joints included in the face of the player, parameters to align the positions of the plurality of joints of the definition information with the positions of the plurality of joints of the recognition information (S205); and

estimate the position of the top of the head of the player is estimated based on the parameters and coordinates of the top of the head of the definition information (S206),

wherein the image input to the machine learning model is any one of an image in the predetermined state where a background color and a color of hair of the player are similar, an image in a state where the hair of the player is disordered, and an image in a state where the head of the player is hidden[1],

[1]Former claim 15

wherein the definition information includes a plurality of candidates of the top of the head, and in the processing of estimating the position of the top of the head, in a case where the parameters are applied to the definition information, a position of a candidate of the top of the head that has a minimum value in a vertical direction among the plurality of candidates of the top of the head is estimated as the position of the top of the head of the player.

**Patentansprüche**

1. Schätzungsprogramm zum Veranlassen eines Computers, eine Verarbeitung auszuführen, umfassend:

Bestimmen von Positionen einer Vielzahl von in einem Gesicht eingeschlossenen Gelenken eines Spielers durch Eingeben eines Bildes, in dem sich ein Kopf des Spielers in einem vorgegebenen Zustand befindet, in ein maschinelles Lernmodell (S 204);
Schätzen einer Position der Oberseite des Kopfes des Spielers unter Verwendung jeder der Positionen der Vielzahl von Gelenken; und Schätzen, basierend auf Definitionsinformationen, die Positionen einer Vielzahl von in einem Gesicht einer Person eingeschlossenen Gelenken und eine Oberseite des Kopfes der Person definieren, und Erkennungsinformationen, die die Positionen der Vielzahl von in einem Gesicht des Spielers eingeschlossenen Gelenken angeben, von Parameter zur Ausrichtung der Positionen der Vielzahl von Gelenken der Definitionsinformationen mit den Positionen der Vielzahl von Gelenken der Erkennungsinformation (S205), wobei, in der Verarbeitung des Schätzens der Position der Oberseite des Kopfes, die Position der Oberseite des Kopfes des Spielers basierend auf den Parametern und Koordinaten der Oberseite des Kopfes der Definitionsinformationen geschätzt wird (S206), wobei das in das maschinelle Lernmodell eingegebene Bild eines von einem Bild in dem vorgegebenen Zustand, in dem eine Hintergrundfarbe und eine Haarfarbe des Spielers ähnlich sind, einem Bild in einem Zustand, in dem das Haar des Spielers ungeordnet ist, und einem Bild in einem Zustand, in dem der Kopf des Spielers verdeckt ist, ist, wobei die Definitionsinformationen eine Vielzahl von Kandidatenpositionen der Oberseite des Kopfes einschließen, und in der Verarbeitung des Schätzens der Position der Oberseite des Kopfes, in einem Fall, in dem die Parameter auf die Definitionsinformationen angewendet werden, eine Position eines Kandidaten der Oberseite des Kopfes, der in Vertikalrichtung einen Minimalwert aufweist, unter der Vielzahl von Kandidatenpositionen der Oberseite des Kopfes als die Position der Oberseite des Kopfes des Spielers geschätzt wird.

2. Schätzungsprogramm nach Anspruch 1, zum Veranlassen des Computers, eine Verarbeitung weiter auszuführen, die das Bewerten einer mit einem Schwebebalken oder einer Bodenübung zusammenhängenden Leistung, basierend auf der Position der Oberseite des Kopfes, umfasst.

3. Schätzungsprogramm nach Anspruch 1, zum Veranlassen des Computers, eine Verarbeitung weiter auszuführen, die das Bestimmen, ob die Position der Oberseite des Kopfes des Spielers, die durch die Verarbeitung des Schätzens geschätzt wird, abnormal ist oder nicht (S208), und das Korrigieren der Position der Oberseite des Kopfes des Spielers in einem Fall, in dem die Position der Oberseite des Kopfes des Spielers abnormal ist (S210), umfasst.

4. Schätzungsverfahren, umfassend:

Bestimmen von Positionen einer Vielzahl von in einem Gesicht eingeschlossenen Gelenken eines Spielers durch Eingeben eines Bildes, in dem sich ein Kopf des Spielers in einem vorgegebenen Zustand befindet, in ein maschinelles Lernmodell (S204);
Schätzen einer Position der Oberseite des Kopfes des Spielers unter Verwendung jeder der Positionen der Vielzahl von Gelenken, und
Schätzen, basierend auf Definitionsinformationen, die Positionen einer Vielzahl von in einem Gesicht einer Person eingeschlossenen Gelenken und eine Oberseite des Kopfes der Person definieren, und Erkennungsinformationen, die die Positionen der Vielzahl von in einem Gesicht des Spielers eingeschlossenen Gelenken angeben, von Parameter zur Ausrichtung der Positionen der Vielzahl von Gelenken der Definitionsinformationen mit den Positionen der Vielzahl von Gelenken der Erkennungsinformation (S205),

wobei, in der Verarbeitung des Schätzens der Position der Oberseite des Kopfes, die Position der Oberseite des Kopfes des Spielers basierend auf den Parametern und Koordinaten der Oberseite des Kopfes der Definitionsinformationen geschätzt wird (S206),

wobei das in das maschinelle Lernmodell eingegebene Bild eines von einem Bild in dem vorgegebenen Zustand, in dem eine Hintergrundfarbe und eine Haarfarbe des Spielers ähnlich sind, einem Bild in einem Zustand, in dem das Haar des Spielers ungeordnet ist, und einem Bild in einem Zustand, in dem der Kopf des Spielers verdeckt ist, ist,

wobei die Definitionsinformationen eine Vielzahl von Kandidatenpositionen der Oberseite des Kopfes einschließen, und in der Verarbeitung des Schätzens der Position der Oberseite des Kopfes, in einem Fall, in dem die Parameter auf die Definitionsinformationen angewendet werden,

eine Position eines Kandidaten der Oberseite des Kopfes, der in Vertikalrichtung einen Minimalwert aufweist, unter der Vielzahl von Kandidatenpositionen der Oberseite des Kopfes als die Position der Oberseite des Kopfes des Spielers geschätzt wird.

5. Schätzungsprogramm nach Anspruch 4, weiter umfassend:
Bewerten einer mit einem Schwebebalken oder einer Bodenübung zusammenhängenden Leistung, basierend auf der Position der Oberseite des Kopfes.

6. Schätzungsverfahren nach Anspruch 4, weiter umfassend:

Bestimmen, ob die Position der Oberseite des Kopfes des Spielers, die durch die Verarbeitung des Schätzens geschätzt wird, abnormal ist oder nicht (S208); und

Korrigieren der Position der Oberseite des Kopfes des Spielers in einem Fall, in dem die Position der Oberseite des Kopfes des Spielers abnormal ist (S210).

7. Informationsverarbeitungsvorrichtung, umfassend:

eine Erzeugungseinheit (153), die ausgebildet ist, Positionen einer Vielzahl von in einem Gesicht eingeschlossenen Gelenken eines Spielers durch Eingeben eines Bildes, in dem sich ein Kopf des Spielers in einem vorgegebenen Zustand befindet, in ein maschinelles Lernmodell zu bestimmen (S204); und

eine Schätzungseinheit (154), die ausgebildet ist, eine Position der Oberseite des Kopfes des Spielers unter Verwendung jeder der Positionen der Vielzahl von Gelenken zu schätzen;

Schätzen, basierend auf Definitionsinformationen, die Positionen einer Vielzahl von in einem Gesicht einer Person eingeschlossenen Gelenken und eine Oberseite des Kopfes der Person definieren, und Erkennungsinformationen, die die Positionen der Vielzahl von in einem Gesicht des Spielers eingeschlossenen Gelenken angeben, von Parameter zur Ausrichtung der Positionen der Vielzahl von Gelenken der Definitionsinformationen mit den Positionen der Vielzahl von Gelenken der Erkennungsinformation (S205); und

Schätzen der Position der Oberseite des Kopfes des Spielers basierend auf den Parametern und Koordinaten der Oberseite des Kopfes der Definitionsinformationen (S206),

wobei das in das maschinelle Lernmodell eingegebene Bild eines von einem Bild in dem vorgegebenen Zustand, in dem eine Hintergrundfarbe und eine Haarfarbe des Spielers ähnlich sind, einem Bild in einem Zustand, in dem das Haar des Spielers ungeordnet ist, und einem Bild in einem Zustand, in dem der Kopf des Spielers verdeckt ist, ist[1],

ehemaliger Anspruch 15

wobei die Definitionsinformationen eine Vielzahl von Kandidatenpositionen der Oberseite des Kopfes einschließen, und in der Verarbeitung des Schätzens der Position der Oberseite des Kopfes, in einem Fall, in dem die Parameter auf die Definitionsinformationen angewendet werden, eine Position eines Kandidaten der Oberseite des Kopfes, der in Vertikalrichtung einen Minimalwert aufweist, unter der Vielzahl von Kandidatenpositionen der Oberseite des Kopfes als die Position der Oberseite des Kopfes des Spielers geschätzt wird.

**Revendications**

1. Programme d'estimation pour amener un ordinateur à mettre en œuvre un traitement comprenant :

la spécification de positions d'une pluralité d'articulations incluses dans un visage d'un joueur en entrant, dans un modèle d'apprentissage automatique, une image dans laquelle la tête du joueur est dans un état prédéterminé (S204) ;

l'estimation d'une position du sommet de la tête du joueur en utilisant chacune des positions de la pluralité d'articulations ; et

l'estimation, sur la base d'informations de définition qui définissent des positions d'une pluralité d'articulations incluses dans le visage d'une personne et un sommet de la tête de la personne et d'informations de reconnaissance qui indiquent les positions de la pluralité d'articulations incluses dans le visage du joueur, de paramètres pour aligner les positions de la pluralité d'articulations des informations de définition avec les positions de la pluralité d'articulations des informations de reconnaissance (S205),

dans lequel, lors du traitement d'estimation de la position du sommet de la tête, la position du sommet de la tête du joueur est estimée sur la base des paramètres et des coordonnées du sommet de la tête des informations de définition (S206),

dans lequel l'image entrée dans le modèle d'apprentissage automatique est l'une quelconque parmi une image dans l'état prédéterminé où une couleur de fond et une couleur de cheveux du joueur sont similaires, une image dans un état où les cheveux du joueur sont en désordre et une image dans un état où la tête du joueur est cachée,

dans lequel les informations de définition incluent une pluralité de candidats du sommet de la tête, et lors du traitement d'estimation de la position du sommet de la tête, dans un cas où les paramètres sont appliqués aux informations de définition, une position d'un candidat du sommet de la tête qui présente une valeur minimale dans la direction verticale parmi la pluralité de candidats du sommet de la tête est estimée comme étant la position du sommet de la tête du joueur.

2. Programme d'estimation selon la revendication 1, pour amener l'ordinateur à mettre en œuvre en outre un traitement comprenant l'évaluation d'une performance relative à une poutre d'équilibre ou à un exercice au sol sur la base de la position du sommet de la tête.

3. Programme d'estimation selon la revendication 1, pour amener l'ordinateur à mettre en œuvre en outre un traitement comprenant l'action de déterminer si la position du sommet de la tête du joueur estimée par le traitement d'estimation est anormale ou non (S208) et la correction de la position du sommet de la tête du joueur dans un cas où la position du sommet de la tête du joueur est anormale (S210).

4. Procédé d'estimation comprenant :

la spécification de positions d'une pluralité d'articulations incluses dans un visage d'un joueur en entrant, dans un modèle d'apprentissage automatique, une image dans laquelle la tête du joueur est dans un état prédéterminé (S204) ;

l'estimation d'une position du sommet de la tête du joueur en utilisant chacune des positions de la pluralité d'articulations, et

l'estimation, sur la base d'informations de définition qui définissent des positions d'une pluralité d'articulations incluses dans le visage d'une personne et un sommet de la tête de la personne et d'informations de reconnaissance qui indiquent les positions de la pluralité d'articulations incluses dans le visage du joueur, de paramètres pour aligner les positions de la pluralité d'articulations des informations de définition avec les positions de la pluralité d'articulations des informations de reconnaissance (S205),

dans lequel, lors du traitement d'estimation de la position du sommet de la tête, la position du sommet de la tête du joueur est estimée sur la base des paramètres et des coordonnées du sommet de la tête des informations de définition (S206),

dans lequel l'image entrée dans le modèle d'apprentissage automatique est l'une quelconque parmi une image dans l'état prédéterminé où une couleur de fond et une couleur de cheveux du joueur sont similaires, une image dans un état où les cheveux du joueur sont en désordre, et une image dans un état où la tête du joueur est cachée,

dans lequel les informations de définition incluent une pluralité de candidats du sommet de la tête, et lors du traitement d'estimation de la position du sommet de la tête, dans un cas où les paramètres sont appliqués aux informations de définition, une position d'un candidat du sommet de la tête qui présente une valeur minimale dans la direction verticale parmi la pluralité de candidats du sommet de la tête est estimée comme étant la position du sommet de la tête du joueur.

5. Programme d'estimation selon la revendication 4, comprenant en outre :
l'évaluation d'une performance relative à une poutre d'équilibre ou à un exercice au sol sur la base de la position du sommet de la tête.

6. Procédé d'estimation selon la revendication 4, comprenant en outre :

l'action de déterminer si la position du sommet de la tête du joueur estimée par le traitement d'estimation est anormale ou non (S208) ; et
la correction de la position du sommet de la tête du joueur dans un cas où la position du sommet de la tête du joueur est anormale (S210).

7. Dispositif de traitement d'informations comprenant :

une unité de génération (153) configurée pour spécifier des positions d'une pluralité d'articulations incluses dans le visage d'un joueur en entrant, dans un modèle d'apprentissage automatique, une image dans laquelle la tête du joueur est dans un état prédéterminé (S204) ; et
une unité d'estimation (154) configurée pour estimer une position du sommet de la tête du joueur en utilisant chacune des positions de la pluralité d'articulations ;
estimer, sur la base d'informations de définition qui définissent des positions d'une pluralité d'articulations incluses dans le visage d'une personne et un sommet de la tête de la personne et d'informations de reconnaissance qui indiquent les positions de la pluralité d'articulations incluses dans le visage du joueur, des paramètres pour aligner les positions de la pluralité d'articulations des informations de définition avec les positions de la pluralité d'articulations des informations de reconnaissance (S205) ; et,
estimer la position du sommet de la tête du joueur sur la base des paramètres et des coordonnées du sommet de la tête des informations de définition (S206),
dans lequel l'image entrée dans le modèle d'apprentissage automatique est l'une quelconque parmi une image dans l'état prédéterminé où une couleur de fond et une couleur de cheveux du joueur sont similaires, une image dans un état où les cheveux du joueur sont en désordre et une image dans un état où la tête du joueur est cachée[1]
[1] ancienne revendication 15,
dans lequel les informations de définition incluent une pluralité de candidats du sommet de la tête, et lors du traitement d'estimation de la position du sommet de la tête, dans un cas où les paramètres sont appliqués aux informations de définition,

une position d'un candidat du sommet de la tête qui présente une valeur minimale dans la direction verticale parmi la pluralité de candidats du sommet de la tête est estimée comme étant la position du sommet de la tête du joueur.

# FIG. 1

# FIG. 2

# FIG. 3

# FIG. 4

| **x** | **Rx** | c**Rx** | c**Rx+t** | \| **y**-(c**Rx+t**) \| |
|---|---|---|---|---|
| (STEP S1) | (STEP S2) | (STEP S3) | (STEP S4) | (STEP S5) |

# FIG. 5

$$y=(cRx+t)$$

FIG. 6

10a

1a

1b  2a    APPEARANCE

10b    1c  1d  2b

HAIR
DISORDER

10c

1e

1f

2c

OCCLUSION

# FIG. 7

```
                                                              ┌─50
┌──────────────────────────────────────────────────────────────┐
│                      TRAINING DEVICE                           │
│                              ┌─55                    ┌─54       │
│              ┌──────────────────────────┐  ┌──────────────────┐│
│              │      CONTROL UNIT         │  │   STORAGE UNIT   ││
│  ┌─51        │         ┌─55a             │  │      ┌─54a       ││
│┌────────────┐│  ┌──────────────┐         │  │ ┌──────────────┐ ││
││COMMUNICATION││  │ ACQUISITION  │         │  │ │ TRAINING DATA│ ││
││    UNIT     ││  │    UNIT      │         │  │ └──────────────┘ ││
│└────────────┘│  └──────────────┘         │  │      ┌─54b       ││
│  ┌─52        │         ┌─55b             │  │ ┌──────────────┐ ││
│┌────────────┐│  ┌──────────────┐         │  │ │ FACIAL JOINT │ ││
││ INPUT UNIT ││  │TRAINING UNIT │         │  │ │  ESTIMATION  │ ││
│└────────────┘│  └──────────────┘         │  │ │    MODEL     │ ││
│  ┌─53        │         ┌─55c             │  │ └──────────────┘ ││
│┌────────────┐│  ┌──────────────┐         │  │                  ││
││DISPLAY UNIT││  │ OUTPUT UNIT  │         │  │                  ││
│└────────────┘│  └──────────────┘         │  │                  ││
│              └──────────────────────────┘  └──────────────────┘│
└──────────────────────────────────────────────────────────────┘
```

# FIG. 8

54a

| ITEM NUMBER | INPUT DATA | CORRECT ANSWER DATA |
|---|---|---|
| 1 | IMAGE FRAME (INCLUDING FACE IMAGE) | POSITIONS OF RESPECTIVE FACIAL JOINTS INCLUDED IN IMAGE FRAME OF ITEM NUMBER "1" |
| 2 | IMAGE FRAME (INCLUDING FACE IMAGE) | POSITIONS OF RESPECTIVE FACIAL JOINTS INCLUDED IN IMAGE FRAME OF ITEM NUMBER "2" |
| 3 | IMAGE FRAME (INCLUDING FACE IMAGE) | POSITIONS OF RESPECTIVE FACIAL JOINTS INCLUDED IN IMAGE FRAME OF ITEM NUMBER "3" |
| ... | ... | ... |

# FIG. 9

100

INFORMATION PROCESSING DEVICE

150

## CONTROL UNIT

140

## STORAGE UNIT

110

COMMUNICATION UNIT

151

ACQUISITION UNIT

54b

FACIAL JOINT ESTIMATION MODEL

120

INPUT UNIT

152

PREPROCESSING UNIT

60a

SOURCE INFORMATION

130

DISPLAY UNIT

153

TARGET INFORMATION GENERATION UNIT

141

MEASUREMENT TABLE

154

ESTIMATION UNIT

142

SKELETON RECOGNITION RESULT TABLE

155

ABNORMALITY DETECTION UNIT

143

TECHNIQUE RECOGNITION TABLE

156

CORRECTION UNIT

157

TECHNIQUE RECOGNITION UNIT

# FIG. 10

141

| CAMERA IDENTIFICATION INFORMATION | IMAGE FRAMES |
|---|---|
| C30a | TIME-SERIES IMAGE FRAMES CAPTURED BY CAMERA 30a |
| C30b | TIME-SERIES IMAGE FRAMES CAPTURED BY CAMERA 30b |
| C30c | TIME-SERIES IMAGE FRAMES CAPTURED BY CAMERA 30c |
| C30d | TIME-SERIES IMAGE FRAMES CAPTURED BY CAMERA 30d |

# FIG. 11

142

| FRAME NUMBER | 3D SKELETON INFORMATION |
|---|---|
| f001 | 3D SKELETON INFORMATION OF FRAME NUMBER "f001" |
| f002 | 3D SKELETON INFORMATION OF FRAME NUMBER "f002" |
| f003 | 3D SKELETON INFORMATION OF FRAME NUMBER "f003" |
| ... | ... |

# FIG. 12

# FIG. 13

# FIG. 14

(STEP S10)     (STEP S11)     (STEP S12)     (STEP S13)

FIG. 15

# FIG. 16

p1-1   p1-2   60a   p1-4

REPROJECT

p1-3

p2-1   p2-2   p2-3   60b   p2-4

pr1-1   pr1-2   pr1-3   pr1-4

# FIG. 17

FIG. 18

# FIG. 19

# FIG. 20

# FIG. 21

# FIG. 22

# FIG. 23

# FIG. 24

(STEP S20)          (STEP S21)          (STEP S22)

# FIG. 25

(STEP  S30)            (STEP  S31)            (STEP  S32)

# FIG. 26

(STEP S40)

(STEP S41)

$\mathbf{b}_{head}$: AFTER CORRECTION

$Th_3$-$\theta$ ($\mathbf{b}_{neck}$, $\mathbf{b}_{head}$)

$\mathbf{b}_{neck}\times\mathbf{b}_{head}$

$\mathbf{b}_{head}$: BEFORE CORRECTION

(STEP S42)

# FIG. 27

START

S101

ACQUIRE TRAINING DATA AND REGISTER
ACQUIRED TRAINING DATA IN STORAGE UNIT

S102

EXECUTE MACHINE LEARNING OF FACIAL JOINT
ESTIMATION MODEL BASED ON TRAINING DATA

S103

TRANSMIT FACIAL JOINT ESTIMATION MODEL TO
INFORMATION PROCESSING DEVICE

END

FIG. 28

START

ACQUIRE FACIAL JOINT ESTIMATION MODEL FROM TRAINING DEVICE AND REGISTER ACQUIRED FACIAL JOINT ESTIMATION MODEL IN STORAGE UNIT ⟋S201

RECEIVE TIME-SERIES IMAGE FRAMES FROM CAMERA AND REGISTER RECEIVED TIME-SERIES IMAGE FRAMES IN MEASUREMENT TABLE ⟋S202

GENERATE 3D SKELETON INFORMATION BASED ON MULTI-VIEWPOINT IMAGE FRAMES OF MEASUREMENT TABLE ⟋S203

GENERATE TARGET INFORMATION BY INPUTTING IMAGE FRAME TO FACIAL JOINT ESTIMATION MODEL ⟋S204

CONVERSION PARAMETER ESTIMATION PROCESSING ⟋S205

APPLY CONVERSION PARAMETERS TO SOURCE INFORMATION TO ESTIMATE TOP OF HEAD ⟋S206

REPLACE INFORMATION OF TOP OF HEAD IN 3D SKELETON INFORMATION WITH ESTIMATED INFORMATION OF TOP OF HEAD ⟋S207

IS ABNORMALITY OF TOP OF HEAD DETECTED? ⟋S208     YES

NO     REGISTER POST-REPLACEMENT SKELETON INFORMATION IN SKELETON RECOGNITION RESULT TABLE ⟋S209

CORRECT POST-REPLACEMENT SKELETON INFORMATION ⟋S210

REGISTER CORRECTED POST-REPLACEMENT SKELETON INFORMATION IN SKELETON RECOGNITION RESULT TABLE ⟋S211

READ TIME-SERIES PIECES OF 3D SKELETON INFORMATION FROM SKELETON RECOGNITION RESULT TABLE AND EXECUTE TECHNIQUE RECOGNITION BASED ON TECHNIQUE RECOGNITION TABLE ⟋S212

END

# FIG. 29

START

S301
SET INITIAL VALUES FOR MAXIMUM inlier NUMBER AND REFERENCE EVALUATION INDEX

S302
ACQUIRE TARGET INFORMATION AND SOURCE INFORMATION

S303
SAMPLE THREE JOINTS FROM TARGET INFORMATION

2

S304
CALCULATE CONVERSION PARAMETERS (R, t, AND c) THAT MINIMIZE DIFFERENCE $e^2$ BETWEEN TARGET INFORMATION AND SOURCE INFORMATION

S305
APPLY CONVERSION PARAMETERS TO SOURCE INFORMATION TO PERFORM REPROJECTION SO AS TO MATCH TARGET INFORMATION

S306
CALCULATE REPROJECTION ERROR ε BETWEEN PROJECTION RESULT OF SOURCE INFORMATION AND THREE JOINTS OF TARGET INFORMATION

S307
SET THE NUMBER OF FACIAL JOINTS WITH WHICH REPROJECTION ERROR ε IS EQUAL TO OR SMALLER THAN THRESHOLD AS inlier NUMBER

S308
CALCULATE OUTLIER EVALUATION INDEX E

1

# FIG. 30

(1)

S309 — inlier NUMBER > MAXIMUM inlier NUMBER?  — YES

NO

S310 — inlier NUMBER = MAXIMUM inlier NUMBER?

NO

YES

S311 — REFERENCE EVALUATION INDEX > OUTLIER EVALUATION INDEX E?

NO

YES

S312 — UPDATE MAXIMUM inlier NUMBER TO inlier NUMBER CALCULATED THIS TIME AND UPDATE REFERENCE EVALUATION INDEX WITH VALUE OF OUTLIER EVALUATION INDEX

S313 — UPDATE CONVERSION PARAMETERS CORRESPONDING TO MAXIMUM inlier NUMBER

S314 — HAS UPPER LIMIT OF THE NUMBER OF TIMES OF SAMPLING BEEN REACHED? — NO

(2)

YES

S315 — OUTPUT CONVERSION PARAMETERS CORRESPONDING TO MAXIMUM inlier NUMBER

END

# FIG. 31

# FIG. 32

# FIG. 33

# FIG. 34

┌─────────────────────────────────────────────────────────────────────┐ ⌐200
│ INFORMATION PROCESSING DEVICE                                          │
│                                                                        │
│                      ⌐250                      ⌐240                    │
│        ┌──────────────────────┐  ┌──────────────────────┐             │
│        │   CONTROL UNIT       │  │   STORAGE UNIT       │             │
│ ⌐110   │         ⌐151         │  │         ⌐54b         │             │
│ ┌──────────┐  ┌──────────────┐│  │┌──────────────────┐  │             │
│ │COMMUNI-  │  │ ACQUISITION  ││  ││ FACIAL JOINT     │  │             │
│ │CATION    ├──┤ UNIT         ││  ││ ESTIMATION       │  │             │
│ │UNIT      │  │              ││  ││ MODEL            │  │             │
│ └──────────┘  └──────────────┘│  │└──────────────────┘  │             │
│ ⌐120          ⌐152            │  │         ⌐60c         │             │
│ ┌──────────┐  ┌──────────────┐│  │┌──────────────────┐  │             │
│ │INPUT UNIT├──┤PREPROCESSING ││  ││ SOURCE           │  │             │
│ │          │  │UNIT          ││  ││ INFORMATION      │  │             │
│ └──────────┘  └──────────────┘│  │└──────────────────┘  │             │
│ ⌐130          ⌐153            │  │         ⌐141         │             │
│ ┌──────────┐  ┌──────────────┐│  │┌──────────────────┐  │             │
│ │DISPLAY   ├──┤TARGET        ││  ││ MEASUREMENT      │  │             │
│ │UNIT      │  │INFORMATION   ││  ││ TABLE            │  │             │
│ └──────────┘  │GENERATION    ││  │└──────────────────┘  │             │
│               │UNIT          ││  │         ⌐142         │             │
│               └──────────────┘│  │┌──────────────────┐  │             │
│                      ⌐254     │  ││ SKELETON         │  │             │
│               ┌──────────────┐│  ││ RECOGNITION      │  │             │
│               │ ESTIMATION   ││  ││ RESULT TABLE     │  │             │
│               │ UNIT         ││  │└──────────────────┘  │             │
│               └──────────────┘│  │         ⌐143         │             │
│                      ⌐155     │  │┌──────────────────┐  │             │
│               ┌──────────────┐│  ││ TECHNIQUE        │  │             │
│               │ABNORMALITY   ││  ││ RECOGNITION      │  │             │
│               │DETECTION     ││  ││ TABLE            │  │             │
│               │UNIT          ││  │└──────────────────┘  │             │
│               └──────────────┘│  └──────────────────────┘             │
│                      ⌐156     │                                       │
│               ┌──────────────┐│                                       │
│               │CORRECTION    ││                                       │
│               │UNIT          ││                                       │
│               └──────────────┘│                                       │
│                      ⌐157     │                                       │
│               ┌──────────────┐│                                       │
│               │TECHNIQUE     ││                                       │
│               │RECOGNITION   ││                                       │
│               │UNIT          ││                                       │
│               └──────────────┘│                                       │
│        └──────────────────────┘                                       │
└─────────────────────────────────────────────────────────────────────┘

FIG. 35

START

ACQUIRE FACIAL JOINT ESTIMATION
MODEL FROM TRAINING DEVICE AND
REGISTER ACQUIRED FACIAL JOINT
ESTIMATION MODEL IN STORAGE UNIT
~S401

RECEIVE TIME-SERIES IMAGE FRAMES
FROM CAMERA AND REGISTER RECEIVED
TIME-SERIES IMAGE FRAMES IN
MEASUREMENT TABLE
~S402

GENERATE 3D SKELETON INFORMATION
BASED ON MULTI-VIEWPOINT IMAGE
FRAMES OF MEASUREMENT TABLE
~S403

GENERATE TARGET INFORMATION BY
INPUTTING IMAGE FRAME TO FACIAL
JOINT ESTIMATION MODEL
~S404

CONVERSION PARAMETER
ESTIMATION PROCESSING
~S405

APPLY CONVERSION PARAMETERS TO
SOURCE INFORMATION TO ESTIMATE
TOP OF HEAD FROM PLURALITY OF HEAD
TOP JOINT CANDIDATES
~S406

REPLACE INFORMATION OF TOP OF HEAD IN
3D SKELETON INFORMATION WITH
ESTIMATED INFORMATION OF TOP OF HEAD
~S407

IS ABNORMALITY
OF TOP OF HEAD
DETECTED?
~S408       YES

NO    ~S409

REGISTER POST-REPLACEMENT
SKELETON INFORMATION IN SKELETON
RECOGNITION RESULT TABLE

CORRECT POST-REPLACEMENT
SKELETON INFORMATION
~S410

REGISTER CORRECTED POST-REPLACEMENT
SKELETON INFORMATION IN SKELETON
RECOGNITION RESULT TABLE
~S411

READ TIME-SERIES PIECES OF 3D SKELETON
INFORMATION FROM SKELETON
RECOGNITION RESULT TABLE AND EXECUTE
TECHNIQUE RECOGNITION BASED ON
TECHNIQUE RECOGNITION TABLE
~S412

END

# FIG. 36

┌─ 300

**COMPUTER**

| CPU 301 | INPUT DEVICE 302 | DISPLAY 303 | COMMUNICATION DEVICE 304 | INTERFACE 305 |

└─ 308

**RAM** 306

| ACQUISITION PROCESS | 306a |
| PREPROCESSING PROCESS | 306b |
| TARGET INFORMATION GENERATION PROCESS | 306c |
| ESTIMATION PROCESS | 306d |
| ABNORMALITY DETECTION PROCESS | 306e |
| CORRECTION PROCESS | 306f |
| TECHNIQUE RECOGNITION PROCESS | 306g |

**HARD DISK DEVICE** 307

| ACQUISITION PROGRAM | 307a |
| PREPROCESSING PROGRAM | 307b |
| TARGET INFORMATION GENERATION PROGRAM | 307c |
| ESTIMATION PROGRAM | 307d |
| ABNORMALITY DETECTION PROGRAM | 307e |
| CORRECTION PROGRAM | 307f |
| TECHNIQUE RECOGNITION PROGRAM | 307g |

# FIG. 37

M1

Te1

| NUMBER | JOINT NAME |
|--------|------------|
| 0 | SPINE_BASE |
| 1 | SPINE_MID |
| 2 | SPINE_SHOULDER |
| 3 | HEAD |
| 4 | SHOULDER_LEFT |
| 5 | ELBOW_LEFT |
| 6 | WRIST_LEFT |
| 7 | SHOULDER_RIGHT |
| 8 | ELBOW_RIGHT |
| 9 | WRIST_RIGHT |
| 10 | HIP_LEFT |
| 11 | KNEE_LEFT |
| 12 | ANKLE_LEFT |
| 13 | FOOT_LEFT |
| 14 | HIP_RIGHT |
| 15 | KNEE_RIGHT |
| 16 | ANKLE_RIGHT |
| 17 | FOOT_RIGHT |
| 18 | NECK |
| 19 | HAND_TIP_LEFT |
| 20 | HAND_TIP_RIGHT |

FIG. 38

## FIG. 39

APPEARANCE

HAIR DISORDER

OCCLUSION

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018057596 A
- JP 2021026265 A
- WO 2007108405 A1
- US 6453052 B1

**Non-patent literature cited in the description**

- **BEN YIP**. EYE CONTACT RECTIFICATION IN VIDEO CONFERENCE WITH MONOCULAR CAMERA. *PhD*, 01 March 2007
- Game- ready 3D hair model from a small set of images. **NUTTAPON VANAKITTISTIEN et al.** COMPUTER ANIMATION AND VIRTUAL WORLDS. JOHN WILEY & SONS LTD, 05 July 2018, vol. 30